# EUROPÄISCHE PATENTSCHRIFT

(11) **EP 4 641 645 B1**
(45) Veröffentlichungstag und Bekanntmachung des Hinweises auf die Patenterteilung: **04.03.2026**
(21) Anmeldenummer: 24172139.8
(22) Anmeldetag: 24.04.2024
(51) Int. Cl.: H01M 4/04, H01M 4/139, B01F 23/60, H01M 4/62

(54) **KONTINUIERLICHES PRODUKTIONSSYSTEM UND VERFAHREN ZUR HERSTELLUNG VON ELEKTRODENMASSEN SOWIE BINDEMITTELDOSIERSYSTEM UND DOSIERVERFAHREN DAFÜR**
CONTINUOUS PRODUCTION SYSTEM AND METHOD FOR PRODUCING ELECTRODE MASSES, AS WELL AS BINDER DOSING SYSTEM AND DOSING METHOD THEREFOR
SYSTÈME DE PRODUCTION EN CONTINU ET PROCÉDÉ DE PRODUCTION DE MASSES D'ÉLECTRODES, SYSTÈME DE DOSAGE DE LIANT ET PROCÉDÉ DE DOSAGE ASSOCIÉ

(43) Veröffentlichungstag der Anmeldung: 29.10.2025
(73) Patentinhaber: Bühler AG, 9240 Uzwil (CH)
(72) Erfinder: HÄNSEL, Christian, 9240 Uzwil (CH); DOLDER, Valentin, 9240 Uzwil (CH)
(74) Vertreter: Prinz & Partner mbB

(56) Entgegenhaltungen:
- EP-A1- 4 202 404
- WO-A1-2023/220025
- US-A1- 2022 293 898
- US-A1- 2023 076 834

## Beschreibung

Die Erfindung betrifft ein kontinuierliches Produktionssystem und ein Verfahren zum Herstellen von Elektrodenmassen sowie ein Bindemitteldosiersystem und ein Verfahren zum kontinuierlichen Dosieren eines fibrillierfähigen Bindemittels für die Herstellung von Elektrodenmassen unter Verwendung des Bindemitteldosiersystems.

Elektrochemische Energiespeicher sind in vielen technischen Gebieten von großer Bedeutung. Die Herstellung der Elektroden derartiger Energiespeicher erfolgt üblicherweise im Nassprozess, wobei in einem Trägerlösungsmittel dispergierte Elektrodenmassen, sogenannte "Slurries", auf einen Stromkollektor, beispielsweise eine metallische Kollektorfolie, aufgetragen und zur Elektrode weiterverarbeitet werden. Die Elektroden können gemeinsam mit einem Separator zu einer Zelle für einen Energiespeicher verarbeitet werden.

Elektrodenmassen enthalten verschiedene pulverförmige Ausgangsmaterialien, die unter Verwendung eines Trägerlösungsmittels im Nassprozess miteinander vermischt werden. Die Ausgangsmaterialien umfassen ein elektrochemisches Aktivmaterial, ein Bindemittel sowie Additive wie elektrische Leitfähigkeitszusätze. Allerdings benötigen Nassprozesse einen zusätzlichen Trocknungsschritt, in dem das eingesetzte Trägerlösemittel wieder entfernt wird. Hierdurch fallen hohe Kosten an, da das Trägerlösemittel nur unter erheblichem technischen und energetischen Aufwand aus der Elektrodenmasse entfernt werden kann.

Daher wurden bereits lösungsmittelfreie Verfahren zur Herstellung von Elektrodenmassen in sogenannten "Trockenprozessen" vorgeschlagen, in denen die pulverförmigen Ausgangsmaterialien ohne Zusatz eines Lösungsmittels miteinander trocken vermischt werden. Hierfür werden die pulverförmigen Ausgangsmaterialien beispielsweise in einer Strahlmühle chargenweise gemischt und granuliert. Neben solchen reinen Batchprozessen sind auch halbkontinuierliche Verfahren bekannt, bei denen die pulverförmigen Ausgangsmaterialien im Batchprozess gemischt und in einem kontinuierlichen Mischer, beispielsweise einem Extruder, zur Elektrodenmasse weiterverarbeitet werden.

Verfahren zur Herstellung von Elektrodenmassen im Trockenprozess sind beispielsweise aus der EP 1 512 185 B1 und der US 2014 / 0 210 129 A1 bekannt.

Die Herstellung von trockenen Elektrodenmassen mittels Batchprozessen hat jedoch den Nachteil, dass hohe Durchsätze nur mit mehreren, parallel geschalteten Mischsystemen erzielt werden können. Ferner lassen sich auch halbkontinuierliche Herstellungsverfahren nur schlecht skalieren, da die Verarbeitungszeit im Mischer pro Charge stark ansteigen kann und einen höheren Kühl- und Heizaufwand erfordert. Die Verwendung einer Strahlmühle zur Mischung der pulverförmigen Ausgangsmaterialen erzeugt ferner einen hohen Luftstrom, der anschließend zur Abtrennung von Feststoffen gereinigt werden muss. Dadurch steigen die Produktionskosten der Elektrodenmassen weiter an. Schließlich eignen sich Strahlmühlen oder andere Batch-basierte Mischsysteme nur für die Herstellung der reinen, granulatartigen Elektrodenmasse. Für eine Nachbearbeitung oder Zerkleinerung der granulatartigen Elektrodenmasse sind weitere unabhängige Apparate notwendig.

Eine Herausforderung der Elektrodenherstellung besteht daher in der Bereitstellung eines vollkontinuierlichen Herstellungsverfahrens für Elektrodenmassen im Trockenprozess sowie eines Produktionssystems zur Durchführung des Verfahrens. Durch die Verwendung eines vollkontinuierlichen Herstellungsverfahrens kann die Produktionskapazität erhöht und eine gleichbleibende Qualität der erhaltenen Elektrodenmassen gewährleistet werden. Insofern bieten vollkontinuierliche Herstellungsverfahren eine Reihe von Vorteilen gegenüber Verfahren, in denen Elektrodenmassen chargenweise hergestellt werden.

Im Trockenprozess hergestellte Elektrodenmassen greifen zudem auf schersensitive, fibrillierfähige Bindemittel wie Polytetrafluorethylen (PTFE), Ethylen-Tetrafluorethylen-Copolymer und Tetrafluorethylen-Hexafluorpropylen-Copolymer (FEP) zurück, weil diese während des Vermischens Fibrillen ausbilden, die mit den restlichen Ausgangsmaterialien eine Verbundstruktur bilden. Dadurch kann die mechanische Integrität der erhaltenen Elektrodenmassen verbessert werden. Das Bindemittel liegt zwar nur in einem niedrigen Anteil von 1 - 2 Gew.-% in der Elektrodenmasse vor, hat aber einen wesentlichen Einfluss auf deren Eigenschaften. Eine Schwierigkeit der kontinuierlichen Herstellung von Elektrodenmassen im Trockenprozess liegt daher in der Dosierung der pulverförmigen Ausgangsmaterialien, und insbesondere in der genauen kontinuierlichen Dosierung des schwerfließenden fibrillierfähigen Bindemittels.

Die WO 2023 / 220 025 A1 schlägt bereits ein Verfahren zur Handhabung von Polytetrafluorethylen (PTFE)-Pulver vor, in dem das PTFE-Pulver durch das Anlegen einer Druckdifferenz befördert wird.

Die EP 4 202 404 A1 beschreibt ein System zum Mischen von festen oder viskosen Materialien mit einer Flüssigkeit und/oder einem Lösemittel zum Herstellen einer Elektrodenmasse.

Die US 2022/0293898 A1 zeigt ein Verfahren zum Herstellen einer Kohlefaserplatte, in dem Kohlefasern mit einem Bindemittel vermischt und in einer Abscheideeinheit einer Herstellungsvorrichtung auf einer Platte abgeschieden werden. Der Transport zur Abscheideeinheit erfolgt mittels eines Gasstroms.

Aus der US 2023/0076834 A1 ist ein Verfahren zum Erzeugen eines fibrillierten Materials für eine elektrochemische Zelle bekannt, in dem ein fibrillierfähiges Bindemittel in einem Extruder mit weiteren Komponenten wie einem Aktivmaterial zum fibrillierten Material verarbeitet wird.

Der Erfindung liegt daher die Aufgabe zu Grunde, die Nachteile des Standes der Technik bei der Herstellung von Elektrodenmassen im Trockenprozess zu vermeiden und insbesondere eine Bindemitteldosierung bereitzustellen, mit der das fibrillierfähige Bindemittel auf einfache Weise kontinuierlich und präzise in einen für die kontinuierliche Herstellung von Elektrodenmassen geeigneten Mischer dosiert werden kann.

Die Aufgabe wird erfindungsgemäß gelöst durch ein Bindemitteldosiersystem zum kontinuierlichen Dosieren eines fibrillierfähigen Bindemittels für die Herstellung von Elektrodenmassen nach Anspruch 1, ein Verfahren zum kontinuierlichen Dosieren eines fibrillierfähigen Bindemittels nach Anspruch 5, ein Produktionssystem zum Herstellen von Elektrodenmassen nach Anspruch 12 und ein Verfahren zum kontinuierlichen Herstellen von Elektrodenmassen nach Anspruch 16.

Erfindungsgemäß wird ein Bindemitteldosiersystem zum kontinuierlichen Dosieren eines fibrillierfähigen Bindemittels für die Herstellung von Elektrodenmassen bereitgestellt, mit einer ersten Dosiervorrichtung, einer zweiten Dosiervorrichtung und einer Nachfüllvorrichtung, welche die erste und zweite Dosiervorrichtung in Förderrichtung verbindet. Die erste Dosiervorrichtung ist dazu eingerichtet, das fibrillierfähige Bindemittel in die Nachfüllvorrichtung volumetrisch zu dosieren, wobei die erste Dosiervorrichtung eine volumetrische Vibrationsrinne oder einen Bandförderer umfasst, um das fibrillierfähige Bindemittel in die Nachfüllvorrichtung volumetrisch zu dosieren. Die Nachfüllvorrichtung umfasst eine Trenneinheit, die eine Partikelfraktion des fibrillierfähigen Bindemittels aus Partikeln mit vorbestimmter Partikelgröße bereitstellt. Ferner ist die Nachfüllvorrichtung dazu eingerichtet, die Partikelfraktion des fibrillierfähigen Bindemittels aus Partikeln mit vorbestimmter Partikelgröße in die zweite Dosiervorrichtung nachzufüllen. Die zweite Dosiervorrichtung ist dazu eingerichtet, das fibrillierfähige Bindemittel in einem kontinuierlichen Mischer kontinuierlich gravimetrisch zu dosieren. Zur Kühlung des fibrillierfähigen Bindemittels umfasst das Bindemitteldosiersystem eine Kühlvorrichtung.

Das erfindungsgemäße Verfahren zum kontinuierlichen Dosieren eines fibrillierfähigen Bindemittels für die Herstellung von Elektrodenmassen kann unter Verwendung des oben beschriebenen Bindemitteldosiersystems durchgeführt werden und umfasst die folgenden Schritte:
a) Bereitstellen eines fibrillierfähigen Bindemittels in einer ersten Dosiervorrichtung;
b) volumetrisches Dosieren des fibrillierfähigen Bindemittels aus der ersten Dosiervorrichtung in eine Nachfüllvorrichtung mittels der volumetrischen Vibrationsrinne oder dem Bandförderer;
c) Nachfüllen des fibrillierfähigen Bindemittels aus der Nachfüllvorrichtung in eine zweite Dosiervorrichtung, wobei die Nachfüllvorrichtung eine Trenneinheit umfasst, die eine Partikelfraktion des fibrillierfähigen Bindemittels aus Partikeln mit vorbestimmter Partikelgröße bereitstellt, wobei die Nachfüllvorrichtung nur die Partikelfraktion mit der vorbestimmten Partikelgröße in die zweite Dosiervorrichtung nachfüllt;
d) gravimetrisches, kontinuierliches Dosieren des fibrillierfähigen Bindemittels aus der zweiten Dosiervorrichtung in einen kontinuierlichen Mischer,
wobei die Schritte b) und/oder c) gesteuert und/oder in definierten Zeitintervallen durchgeführt werden und wobei einer oder mehrere der Schritte a) bis d) unter Kühlung durchgeführt werden.

Zwischen der ersten Dosiervorrichtung, die eine volumetrische Grobdosierung des Bindemittels durchführt, und der zweiten Dosiervorrichtung, die eine kontinuierliche gravimetrische Feindosierung des Bindemittels durchführt, ist in Förderrichtung eine Nachfüllvorrichtung angeordnet. Die Nachfüllvorrichtung dient als Puffer bzw. Speicher für Bindemittel aus der ersten Dosiervorrichtung und ermöglicht ein kontrolliertes und konstantes Nachfüllen der zweiten Dosiervorrichtung. Dadurch kann auf einfache Weise ein präzises und kontinuierliches Dosieren des fibrillierfähigen Bindemittels mit hoher Dosiergenauigkeit erreicht werden.

Aufgrund der Kombination von volumetrischen und gravimetrischen Dosiervorrichtungen mit einer dazwischengeschalteten Nachfüllvorrichtung kann die Dosiergenauigkeit der zweiten Dosiervorrichtung über den gesamten Dosierprozess konstant gehalten werden. Ferner kann auch der Durchsatz an Bindemitteln im Vergleich zu Batch-Verfahren oder halbkontinuierlichen Herstellungsverfahren für Elektrodenmassen erhöht werden. Zudem ist das Bindemitteldosiersystem weniger wartungsintensiv, da kein manueller Eingriff zum Nachfüllen der zweiten Dosiervorrichtung erforderlich ist.

Das pulverförmige fibrillierfähige Bindemittel neigt aufgrund seiner hohen Temperatur- und Schersensitivität zur Anhaftung an Oberflächen und zur Bildung von Agglomeraten bzw. Verklumpungen, welche sich nicht mehr mit der erforderlichen Genauigkeit dosieren lassen. Bereits das Eigengewicht des Bindemittels in den Dosiervorrichtungen kann die Bildung von Agglomeraten verursachen. Die Erfinder haben hier erkannt, dass das Bindemittel der zweiten Dosiervorrichtung in definierter pulvriger Form zugeführt und der Füllstand an fibrillierfähigem Bindemittel in der zweiten Dosiervorrichtung möglichst geringgehalten werden muss, um eine Agglomeratbildung zu vermeiden und eine hochpräzise Dosierung des Bindemittels in einen kontinuierlichen Mischer zu gewährleisten. Durch die Zwischenschaltung eines Nachfüllschritts kann der Füllstand des schersensitiven Bindemittels in der zweiten Dosiervorrichtung so geringgehalten werden, dass ein Kompaktieren des Bindemittels in der zweiten Dosiervorrichtung aufgrund seines Eigengewichts verhindert und eine gravimetrische Feindosierung zu den übrigen Komponenten der Elektrodenmasse möglich wird.

Die Kühlung des schwerfließenden fibrillierfähigen Bindemittels trägt dazu bei, dass das Bindemittel kontinuierlich, konstant und präzise in die Prozesszone eines kontinuierlichen Mischers dosiert werden kann. Scherkräfte und Temperaturen von über 18 °C können bereits zu einer Phasenumwandlung der Bindemittelmoleküle und beispielsweise zu Fibrillierung, Erweichung und/oder Schmelzen führen, wodurch die Fließeigenschaften des pulvrigen Bindemittels stark beeinflusst werden. Durch die Kühlung wird verhindert, dass sich Verklumpungen und Anhaftungen des Bindemittelpulvers bilden und so die Kontinuität, Konstanz und Präzision der Bindemitteldosierung beeinträchtigen.

Mit der erfindungsgemäßen Bindemitteldosierung kann daher eine Dosiergenauigkeit der zweiten, gravimetrischen Dosiervorrichtung in Schritt d) mit einer Sollwertabweichung von ≤ 3% erreicht werden, bevorzugt ≤ 2%, ganz bevorzugt ≤ 1%. Die Standardabweichung der Dosiergenauigkeit liegt bevorzugt bei ≤ 3%, bevorzugt ≤ 2%, ganz bevorzugt ≤ 1%. Die Dosiergenauigkeit wird mittels des NAMUR NA 040-Verfahrens bestimmt, wobei die Dosiergenauigkeit mit 30 aufeinanderfolgenden Proben von PTFE als Bindemittel im Abstand von 60 s bestimmt wurde.

Unter dem Begriff "volumetrisches Dosieren" wird ein volumengeregeltes Dosieren des fibrillierfähigen Bindemittels verstanden, bei dem der Materialaustrag durch einen vorbestimmten und konstanten Dosierparameter bestimmt wird, mit dem die zweite Dosiervorrichtung betrieben wird. Mit anderen Worten erfolgt bei konstantem Dosierparameter pro Zeiteinheit der gleiche Materialaustrag an Bindemittel.

"Gravimetrisches" Dosieren meint ein gewichtsgeregeltes Dosieren des fibrillierfähigen Bindemittels aus der zweiten Dosiervorrichtung in einen kontinuierlichen Mischer. Im Gegensatz zum volumetrischen Dosieren werden ebenfalls ein oder mehrere Dosierparameter verwendet, wobei diese während des Verfahrens fortlaufend angepasst bzw. nachgeregelt werden.

Unter einem fibrillierfähigen Bindemittel wird ein Material verstanden, das unter Einwirkung von Scherkraft Fibrillen ausbildet, wobei tendenziell mit zunehmender Scherkraft, zunehmender Temperatur und zunehmender Dauer der Einwirkung der Scherkraft auf das fibrillierfähige Bindemittel eine höhere Anzahl an Fibrillen und/oder Fibrillen mit einer größeren Länge erzeugt werden.

Fibrillierfähige Bindemittel sind beispielsweise aus der US 10 741 843 B2 und der US 11 545 666 B2 bekannt.

Erfindungsgemäß umfasst die erste Dosiervorrichtung eine volumetrische Vibrationsrinne oder Rüttelrinne, die das fibrillierfähige Bindemittel unter Vermeidung von Scherkräften in Schritt b) aus einem Behälter in die Nachfüllvorrichtung volumetrisch dosiert. In diesem Fall kann der Dosierparameter des volumetrischen Dosierens eine Vibrationsintensität oder Vibrationsfrequenz sein. Als Alternative zu einer Vibrationsrinne kann ein Bandförderer eingesetzt werden, der ebenfalls eine scherarme Dosierung ermöglicht. Der vorbestimmte Dosierparameter kann vorab kalibriert und auf die nachfolgenden Verfahrensschritte c) und d) abgestimmt werden.

Die zweite Dosiervorrichtung umfasst bevorzugt eine gravimetrische Vibrationsrinne oder Rüttelrinne, die das fibrillierfähige Bindemittel unter Vermeidung von Scherkräften in Schritt d) aus einem Behälter über die Vibrationsrinne in einen kontinuierlichen Mischer gravimetrisch dosiert, wobei mittels einer Waage ein Gewichtsverlust innerhalb des Behälters pro Zeiteinheit festgestellt wird. Dieser zeitabhängige Gewichtsverlust wird von der gravimetrischen Vibrationsrinne berücksichtigt, indem der Dosierparameter angepasst wird, beispielsweise die Vibrationsintensität oder Vibrationsfrequenz, sodass stets ein konstanter Materialaustrag an Bindemittel und damit eine hohe Dosiergenauigkeit gewährleistet wird. Bevorzugt kann als zweite Dosiervorrichtung ein sogenannter Loss-in-Weight-Feeder verwendet werden. Auch in der zweiten Dosiervorrichtung kann ein Bandförderer anstelle der Vibrationsrinne eingesetzt werden.

Das fibrillierfähige Bindemittel kann ausgewählt sein aus der Gruppe bestehend aus Polytetrafluorethylen (PTFE), Ethylen-Tetrafluorethylen-Copolymer, Tetrafluorethylen-Hexafluorpropylen-Copolymer (FEP) und hochmolekularem Polyethylen (PE) sowie Kombinationen davon. Besonders bevorzugt ist das fibrillierfähige Bindemittel Polytetrafluorethylen.

Die Trenneinheit trennt eine Grobfraktion des Bindemittels von einer Partikelfraktion aus Partikeln mit einer vorbestimmten Partikelgröße ab, wobei die Nachfüllvorrichtung nur die Partikelfraktion des Bindemittels mit der vorbestimmten Partikelgröße in die zweite Dosiervorrichtung nachfüllt. Die Grobfraktion umfasst insbesondere ungewollte Bindemittelagglomerate, die bereits in dem als Ausgangsmaterial verwendeten Bindemittel vorliegen oder sich während Schritt a) und/oder b) gebildet haben. Durch das Abtrennen der Grobfraktion von den übrigen Partikeln des Bindemittels wird in der Nachfüllvorrichtung die Partikelfraktion mit vorbestimmter Partikelgröße bereitgestellt. Mit anderen Worten stellt die von der Grobfraktion befreite Partikelfraktion ein Bindemittelpulver mit definierten Eigenschaften und damit verbesserter Dosierbarkeit dar.

Die Trenneinheit kann insbesondere ein Vibrationssieb oder Rüttelsieb umfassen. Die Partikelfraktion mit der vorbestimmten Partikelgröße kann durch eine Maschenweite von 1 bis 4 mm definiert sein. In Anlehnung an DIN 4783-1 bezeichnet die Maschenweite hier und im Folgenden die lichte Weite der Sieblöcher, definiert als lichter Abstand zwischen zwei benachbarten Kett- oder Schussdrähten in der Mitte der Maschenweite gemessen.

Die vorbestimmte Partikelgröße kann anhand der Spezifikationen für die Elektrodenmasse festgelegt werden.

Die Verfahrensschritte b) und/oder c) erfolgen gesteuert und/oder in definierten Zeitintervallen. Ein aktives Ansteuern der Schritte b) und/oder Schritt c) bietet den Vorteil, dass ein Nachfüllzyklus bestehend aus den beiden Schritten nur bei Bedarf durchgeführt wird, wenn die zweite Dosiervorrichtung Nachschub an fibrillierfähigem Bindemittel benötigt. Es versteht sich, dass die Schritte b) und c) durchgeführt werden sollten, bevor die zweite Dosiervorrichtung leerläuft, um den kontinuierlichen Betrieb des Dosiersystems und des nachgelagerten kontinuierlichen Mischprozesses zu gewährleisten. Alternativ und/oder zusätzlich können die Verfahrensschritte b) und/oder c) auch in definierten Zeitintervallen, also periodisch, durchgeführt werden. Nachfolgend werden die Begriffe Zeitspanne und Zeitintervall synonym verwendet. Dadurch kann vorteilhafterweise eine Steuerung entfallen, die üblicherweise aufwendig und kostenintensiv ist. Die definierten Zeitintervalle können beispielsweise in Form einer vorgegebenen Dosiertaktung für die erste und zweite Dosiervorrichtung sowie die Nachfüllvorrichtung implementiert werden.

Gemäß einem Aspekt der Erfindung ist es vorgesehen, dass die Nachfüllvorrichtung ferner einen Bindemittelspender umfasst, in dem die Partikelfraktion des Bindemittels mit der vorbestimmten Partikelgröße gesammelt wird, bevor die Partikelfraktion aus dem Bindemittelspender in die zweite Dosiervorrichtung nachgefüllt wird. Der Bindemittelspender trennt die erste volumetrische Dosiervorrichtung von der zweiten gravimetrischen Dosiervorrichtung und erlaubt es, die Partikelfraktion des Bindemittels mit der vorbestimmten Partikelgröße kontrolliert in die zweite Dosiervorrichtung abzugeben.

Ein weiterer Aspekt des erfindungsgemäßen Verfahrens sieht vor, dass Schritt c) nur erfolgt, wenn eine vorbestimmte Menge der Partikelfraktion im Bindemittelspender gesammelt ist. Mit anderen Worten kann dem Bindemittelspender ein Schwellenwert in Form eines Gewichtswerts vorgegeben werden, ab dem das fibrillierfähige Bindemittel in die zweite Dosiervorrichtung nachgefüllt wird. Der Gewichtswert kann aus den Dosierparametern der ersten Dosiervorrichtung errechnet werden. Dadurch kann ein automatisiertes Nachfüllen der zweiten Dosiervorrichtung erreicht werden.

Der Bindemittelspender umfasst insbesondere ein Dosierelement, das mit der zweiten Dosiervorrichtung in Förderrichtung gekoppelt ist. Das Dosierelement ist bevorzugt eine Dosierklappe, eine Dosierschaufel, ein Dosierschieber oder ein Dosierrad. Bevorzugt ist das Dosierelement eine Dosierklappe.

Gemäß einem weiteren Aspekt des erfindungsgemäßen Verfahrens füllt der Bindemittelspender eine diskrete Menge der Partikelfraktion mittels des Dosierelements in die zweite Dosiervorrichtung nach. Insbesondere ist das Dosierelement so ausgebildet, dass das Nachfüllen des Bindemittels unter Vermeidung von Scherkräften erfolgt, die im Mechanismus des Dosierelements oder durch Verstreichen des Bindemittels an den Wänden des Bindemittelspenders auftreten können.

Das wiederkehrende Nachfüllen einer diskreten Menge der Partikelfraktion mit vorbestimmter Partikelgröße erlaubt es auf einfache Weise, den Füllstand in der zweiten Dosiervorrichtung möglichst gering zu halten, um ein unerwünschtes Kompaktieren des Bindemittels in der zweiten Dosiervorrichtung zu verhindern. Darüber hinaus kann durch das Dosierelement die Nachfüllzeit, in der die zweite Dosiervorrichtung nachgefüllt wird, möglichst geringgehalten werden, indem durch ein Öffnen des Dosierelements der Bindemittelspender schlagartig geleert wird. Außerdem verhindert das Dosierelement, dass das gesammelte Bindemittel unkontrolliert in die zweite Dosiervorrichtung fallen bzw. rieseln kann. Somit kann eine Störung bzw. Beeinträchtigung des Wägesignals der zweiten Dosiervorrichtung verhindert werden.

Während des Nachfüllvorgangs schaltet die zweite Dosiereinrichtung von einer gravimetrischen Dosierung in eine volumetrische Dosierung um. Dazu wird insbesondere der vor dem Nachfüllvorgang eingestellte Dosierparameter der gravimetrischen Vibrationsrinne beibehalten. Sobald der Nachfüllvorgang beendet, das Bindemittel aus dem Bindemittelspender in die zweite Dosiervorrichtung abgegeben ist und das Dosierelement des Bindemittelspenders wieder geschlossen ist, erfolgt eine Neukalibrierung der zweiten Dosiervorrichtung und eine Wiederaufnahme des gravimetrischen Betriebs. Dadurch kann sowohl der kontinuierliche Betrieb des Dosiersystems gewährleistet als auch eine Anhaftung oder Agglomeratbildung in der zweiten Dosiervorrichtung verhindert werden. Gleichzeitig kann dadurch die zweite Dosiervorrichtung mit einer hohen Dosiergenauigkeit betrieben werden, die für einen kontinuierlichen Herstellungsprozess der Elektrodenmasse erforderlich ist. Insbesondere kann eine Dosiergenauigkeit mit einer Sollwertabweichung von < 3% erreicht werden.

Unabhängig davon können die Schritte b) und/oder c) vorteilhafterweise so ausgelegt bzw. durchgeführt werden, dass stets dieselbe Menge an fibrillierfähigem Bindemittel bei einem Nachfüllzyklus in die zweite Dosiervorrichtung nachgefüllt wird, was die Dosiergenauigkeit der zweiten Dosiervorrichtung weiter erhöht.

Ein weiterer Aspekt des erfindungsgemäßen Verfahrens sieht vor, dass während des Schritts d) ein Wiegeschritt durchgeführt wird, bei dem ein Gewichtswert des fibrillierfähigen Bindemittels in der zweiten Dosiervorrichtung kontinuierlich ermittelt wird, wobei wenn ein Gewichtswert festgestellt wird, der niedriger als ein vorbestimmter Sollwert ist, ein Steuerungssignal von der zweiten Dosiervorrichtung an die Nachfüllvorrichtung und/oder die erste Dosiervorrichtung ausgegeben wird, wodurch der Schritt c) und/oder Schritt b) durchgeführt wird.

Die zweite Dosiervorrichtung ermittelt aufgrund des gravimetrischen Dosierens ohnehin den Gewichtswert an fibrillierfähigem Bindemittel, sodass über den Gewichtswert auch der Füllstand an fibrillierfähigem Bindemittel in der zweiten Dosiervorrichtung überwacht werden kann. Dadurch kann ein Nachfüllzyklus, bestehend aus den Schritten b) und c) bei Bedarf von der zweiten Dosiervorrichtung angefordert werden, sodass stets eine ausreichende Menge an fibrillierfähigem Bindemittel in der zweiten Dosiervorrichtung vorhanden ist. Dadurch funktioniert das erfindungsgemäße Dosierverfahren auch vollautomatisch, ohne dass ein manuelles Eingreifen erforderlich ist.

Alternativ können die Schritte b), c) und d) durch eine Dosiertaktung vorgegeben werden. Insbesondere kann die zeitliche Abfolge der Schritte b), c) und d) durch die Dosiertaktung vorgegeben werden.

Das erfindungsgemäße Bindemitteldosiersystem kann ferner eine Transfereinheit umfassen, die stromabwärts von der zweiten Dosiervorrichtung angeordnet ist und die mit der zweiten Dosiervorrichtung gekoppelt ist. Die Transfereinheit umfasst wenigstens einen Sammeltrichter sowie eine an den Sammeltrichter gekoppelte Vibrationseinheit. Die Transfereinheit nimmt das aus der zweiten Dosiereinheit dosierte Bindemittel auf und überführt diesen in einen kontinuierlichen Mischer. Die Vibrationseinheit kann den Sammeltrichter in Schwingung versetzen, wodurch vermieden werden kann, dass sich Bindemittel in unerwünschter Weise an Innenwänden im Rohrelement und/oder im Sammeltrichter anlagert. Bevorzugt umfasst die Vibrationseinheit eine Ultraschallsonde.

Die Transfereinheit kann wenigstens ein mit der zweiten Dosiervorrichtung gekoppeltes Rohrelement aufweisen, das zentral mittig, insbesondere etwa bis zur Hälfte, in den Sammeltrichter hineinragt.

Gemäß einem weiteren Aspekt der Erfindung mündet wenigstens eine zusätzliche Dosiervorrichtung für ein weiteres Elektrodenmaterial in den Sammeltrichter. Insbesondere münden mehrere zusätzliche Dosiervorrichtungen für weitere Elektrodenmaterialien in den Sammeltrichter.

Gemäß einem weiteren Aspekt der Erfindung ist der Sammeltrichter mit einem Deckel verschlossen, der einzelne Öffnungen für Dosiervorrichtungen aufweist, wobei der Sammeltrichter ferner strömungsmäßig mit einer Aspirationseinheit verbunden ist, die dazu eingerichtet ist, Abluft aus dem Sammeltrichter abzusaugen.

Erfindungsgemäß umfasst das Bindemitteldosiersystem ferner eine Kühlvorrichtung zur Kühlung des fibrillierfähigen Bindemittels. Die Kühlvorrichtung erlaubt es, dass einer oder mehrere der Schritte a) - d) unter Kühlung durchgeführt werden, insbesondere bei einer Umgebungstemperatur von 1 - 18°C, bevorzugt von 5 - 15°C, ganz besonders bevorzugt von 4 - 10°C. Bevorzugt werden alle Schritte des Dosierverfahrens unter Kühlung durchgeführt, insbesondere alle Schritte von der Bereitstellung des Bindemittels und Überführung in die erste Dosiereinheit bis zur kontinuierlichen Dosierung und Überführung des Bindemittels in den kontinuierlichen Mischer .

Unter dem Begriff "Umgebungstemperatur" wird die Temperatur verstanden, welche die Peripherie aufweist, welche die in den Verfahrensschritten a) - d) verwendeten Vorrichtungen unmittelbar umgibt. Es versteht sich von selbst, dass die Umgebungstemperatur auch im Wesentlichen die Temperatur darstellt, die innerhalb der Vorrichtungen herrscht.

Mit anderen Worten werden die einzelnen Vorrichtungen, insbesondere die erste und zweite Dosiervorrichtung sowie die Nachfüllvorrichtung und wahlweise die Transfereinheit, unter gekühlten Bedingungen betrieben, wodurch die Agglomerationsneigung des fibrillierfähigen Bindemittels verringert wird und die Fließeigenschaften verbessert werden.

Um die Umgebungstemperatur abzusenken, können als Kühlvorrichtung beispielsweise ein Kühlturm, Kühlkammern, Kühlmodule und/oder Kühleinheiten verwendet werden, welche die verschiedenen in dem Verfahren verwendeten Vorrichtungen des Bindemitteldosiersystems kühlen.

Gemäß einer weiteren bevorzugten Ausführungsform kann das Bindemitteldosiersystem somit eine kühlbare und/oder klimatisierbare Einhausung aufweisen. Die Einhausung kann insbesondere ein Kühlturm sein, in dem die erste und zweite Dosiervorrichtung, die Nachfüllvorrichtung und wahlweise die Transfereinheit angeordnet sind.

Gemäß einer weiteren bevorzugten Ausführungsform ist das Bindemitteldosiersystem wenigstens teilweise, bevorzugt vollständig, in dem Kühlturm eingehaust, der die Komponenten des Bindemitteldosiersystems wenigstens teilweise, bevorzugt vollständig, in einer Kühlkammer einschließt und die Kühlkammer auf eine vorbestimmte Temperatur kühlt.

Alternativ umfasst die Kühlvorrichtung des Bindemitteldosiersystems wenigstens ein Kühlmodul und/oder eine Kühleinheit, die einen Abschnitt des Bindemitteldosiersystems auf eine vorbestimmte Temperatur kühlen.

Anstelle eines Kühlturms kann die Einhausung ein oder mehrere Kühlmodule mit Kühlkammern umfassen. Dabei können die erste und zweite Dosiervorrichtung, die Nachfüllvorrichtung und wahlweise die Transfereinheit jeweils in einer eigenen Kühlkammer angeordnet sein, oder es können mehrere der genannten Vorrichtungen zusammen in einer gemeinsamen Kühlkammer angeordnet sein.

Die Kühleinheiten können eine kühlbare Ummantelung der genannten Vorrichtungen oder Teilen davon umfassen. Beispielsweise kann das Rohrelement der Transfereinheit mit einem Kühlmantel versehen sein.

Ein weiterer Aspekt der Erfindung sieht vor, dass einer oder mehrere der Schritte a) - d) bei einer konstanten Luftfeuchtigkeit durchgeführt werden, insbesondere bei einem Taupunkt kleiner als 0°C, bevorzugt kleiner als -10°C, ganz besonders bevorzugt von -20°C. Der Taupunkt kann mittels der Norm ISO 8573-3 bestimmt werden. Eine geringe Luftfeuchtigkeit innerhalb der Vorrichtungen reduziert die Menge an Kondenswasser, welches ebenfalls die Agglomeratbildung des fibrillierfähigen Bindemittels fördert und die Eigenschaften der Elektrodenmasse verschlechtert.

Die Luftfeuchtigkeit kann beispielsweise mittels einer Klimaeinheit eingestellt werden. Insbesondere kann die Klimaeinheit in der kühlbaren Einhausung angeordnet sein.

Das erfindungsgemäße Dosierverfahren ermöglicht es, das schwerfließende fibrillierfähige Bindemittel kontinuierlich, konstant und präzise in die Prozesszone eines kontinuierlichen Mischers zu dosieren. Die Dosierung des Bindemittels erfolgt dabei vorzugsweise unter scherarmen, trockenen und gekühlten Bedingungen. Scherkräfte und Temperaturen von über 18 °C können bereits zu einem Phasenübergang der Bindemittelmoleküle und beispielsweise zu Fibrillierung, Erweichung und/oder Schmelzen führen, wodurch die Fließeigenschaften des pulvrigen Bindemittels stark beeinflusst werden. Außerdem kann ein Phasenübergang des Bindemittels zu Verklumpungen und Anhaftungen des Pulvers führen und so die Kontinuität, Konstanz und Präzision der Bindemitteldosierung beeinträchtigen.

Gemäß einer besonders bevorzugten Ausführungsform wird daher das Dosierverfahren vollständig unter Kühlung bei vorzugsweise ≤ 10 °C und regulierter relativer Luftfeuchtigkeit durchgeführt, um eine Kondensation zu vermeiden. Dazu kann das Dosiersystem für das Bindermittel vollständig in einem Kühlturm angeordnet sein.

Bevorzugt wird bereits das als Ausgangsmaterial eingesetzte Bindemittel im Kühlturm gelagert, um eine Materialtemperatur von ≤ 10 °C vor Aufgabe des Bindemittels in das Dosiersystem zu gewährleisten. Die Aufgabe des vorgekühlten Bindermittels kann entweder über eine Gebinde-Entleerungsstation oder mittels einer Druckdifferenz, beispielsweise mittels einer Vakuumförderstation oder mittels eines Trägergases, erfolgen.

Anschließend kann das Bindemittel aus dem Gebinde unter Vermeidung von Scherkräften in eine Vibrationsrinne oder einen Bandförderer der ersten Dosiereinheit überführt werden. Mittels der Vibrationsrinne oder dem Bandförderer wird eine exakt definierte Menge des Bindermaterials volumetrisch gefördert und chargenweise über ein Fallrohr auf ein Rüttel- oder Vibrationssieb der Nachfüllvorrichtung abgeworfen. Mit Hilfe des Siebes werden Binderagglomerate kontinuierlich abgetrennt und eine Partikelfraktion des Bindemittels mit einer durch die Siebweite definierten vorbestimmten Partikelgröße bereitgestellt. Die komplette Charge des gesiebten Bindemittels wird unterhalb des Siebes in dem Bindemittelspender gesammelt. Ist der Siebvorgang der Charge abgeschlossen, wird die Partikelfraktion des Bindemittels mit der vorbestimmten Partikelgröße über eine Dosierklappe oder ein anderes Dosierelement des Bindemittelspenders in den Sammeltrichter einer zweiten Vibrationsrinne oder eines Bandförderers der zweiten Dosiervorrichtung abgeworfen.

Mit Hilfe der zweiten Dosiervorrichtung wird das gesiebte Bindemittel gravimetrisch in den kontinuierlichen Mischer dosiert. Insbesondere ermöglicht die Erfindung einen kontinuierlichen Betrieb der zweiten Dosiervorrichtung mit hoher Dosiergenauigkeit. Aus der zweiten Dosiervorrichtung wird das Bindemittel über ein gekühltes Rohrelement, insbesondere einem Fallrohr, zentral in einen Sammeltrichter der Transfereinheit dosiert, die an einen geeigneten kontinuierlichen Mischer gekoppelt werden kann. Das Fallrohr der Bindemitteldosierung kann so angeordnet sein, dass es in den Sammeltrichter der Transfereinheit hineinragt, um einen zentralen Abwurf des Bindemittels in den Mischer zu gewährleisten. Eine Anhaftung und Aufbau des Bindermittels an den Wänden des Sammeltrichters kann so vermieden werden.

Zur Vermeidung von Anhaftungen des Bindemittels an den Oberflächen des Bindemitteldosiersystems können zusätzliche Maßnahmen ergriffen werden. Diese umfassen eine haftmindernde Beschichtung oder eine spiegelpolierte Ausführung der Oberflächen, die mit dem fibrillierfähigen Bindemittel in Berührung kommen können, und/oder das Einblasen von trockener Luft oder Stickstoff über feine Poren in der Oberfläche zur Bereitstellung eines Luftpolsters. Ferner können einzelne Bauteile des Bindemitteldosiersystems in Schwingung bzw. Bewegung versetzt werden, beispielsweise mit Hilfe einer Ultraschallsonde.

Das erfindungsgemäße Bindemitteldosiersystem kann an jeden kontinuierlichen Mischer gekoppelt werden, der für eine kontinuierliche Herstellung von Elektrodenmassen geeignet ist.

Gegenstand der Erfindung ist somit auch ein kontinuierliches Produktionssystem, welches das erfindungsgemäße Bindemitteldosiersystem und einen kontinuierlichen Mischer umfasst. Ferner betrifft die Erfindung ein Verfahren zum kontinuierlichen Herstellen von Elektrodenmassen unter Verwendung des Produktionssystems.

Das Produktionssystem zur Herstellung von Elektrodenmassen umfasst insbesondere das oben beschriebene Bindemitteldosiersystem und einen kontinuierlichen Mischer, der mit der zweiten Dosiervorrichtung des Bindemitteldosiersystems in Förderrichtung gekoppelt ist.

Beispielsweise kann der kontinuierliche Mischer ein Kneter, Extruder, ein Planetenwalzenextruder oder Mehrwellenextruder sein, bevorzugt ein gleichläufiger Doppelwellenextruder. Das hier beschriebene Produktionssystem bietet den Vorteil einer vollautomatischen und kontinuierlichen Herstellung von Elektrodenmassen mit gleichbleibender Qualität.

Bevorzugt ist der kontinuierliche Mischer ein Extruder, der ein Gehäuse mit einem vorderen Abschnitt A aufweist, an dem sich stromabwärts in Förderrichtung nacheinander ein mittlerer Abschnitt B und ein hinterer Abschnitt C anschließen, wobei im vorderen und/oder mittleren Abschnitt wenigstens einen Einlass für ein fibrillierfähiges Bindemittel und/oder weitere Elektrodenkomponenten und im hinteren Abschnitt ein Ausgang mit einer Auswurföffnung vorgesehen ist.

Der vordere Abschnitt A dient insbesondere zur Aufnahme und zum Vermischen des fibrillierfähigen Bindemittels und der weiteren Komponenten der Elektrodenmasse.

Der Extruder kann wenigstens eine Extruderwelle aufweisen, die sich in Förderrichtung durch das Gehäuse erstreckt und dazu eingerichtet ist, die Elektrodenmasse im mittleren Abschnitt zu homogenisieren, zu kneten und das Bindemittel unter Einwirkung von Scherkräften und Wärme zu fibrillieren.

Im hinteren Abschnitt kann das Gehäuse einen Ausgang aufweisen, durch den die Elektrodenmasse aus dem Extruder abgeführt werden kann.

Unabhängig von der Art des an den kontinuierlichen Mischer angeschlossenen Bindemitteldosiersystems kann der kontinuierliche Mischer außerdem die im Folgenden beschriebenen Merkmale aufweisen, mit denen die kontinuierliche Herstellung von Elektrodenmassen weiter verbessert werden kann. Bevorzugt umfasst das Produktionssystem jedoch ein Bindemitteldosiersystem nach einem der oben beschriebenen Aspekte.

Gegenstand der Erfindung ist daher auch ein kontinuierliches Produktionssystem zur Herstellung von Elektrodenmassen mit einem kontinuierlichen Mischer, der mindestens eine der nachfolgend beschriebenen Eigenschaften umfasst.

Gemäß einem Aspekt des kontinuierlichen Mischers umfasst der Mischer wenigstens ein Mischwerkzeug, bevorzugt mindestens eine Extruderwelle mit mehreren Misch- und/oder Förderelementen, das zumindest abschnittsweise oder vollständig aus einem Kunststoff gefertigt ist oder einen Kunststoffmantel umfasst, der einen metallischen Kern umhüllt, insbesondere wobei der Kunststoff PEEK ist.

Die im kontinuierlichen Mischer geförderte Elektrodenmasse weist abrasive Eigenschaften auf, durch die Mischwerkzeuge, insbesondere die Misch- und/oder Förderelemente der Extruderwelle, aus metallischen Werkstoffen einen übermäßigen Verschleiß erfahren können. Zudem können von den metallischen Mischwerkzeugen abgetragene Metallspäne bzw. Metallpartikel in die Elektrodenmasse gelangen und deren Eigenschaften beeinflussen. Diese Nachteile können auf einfache Weise durch die Verwendung von Mischwerkzeugen, insbesondere Misch- und/oder Förderelementen, aus nichtleitendem oder nur geringfügig leitendem Kunststoff verhindert werden.

Bevorzugt ist der kontinuierliche Mischer ein Extruder, und die Mischelemente und/oder Förderelemente, die zumindest abschnittsweise vollständig aus einem Kunststoff gefertigt sind oder einen Kunststoffmantel umfassen, sind im mittleren Abschnitt B des Extruders angeordnet, da in diesem Abschnitt die stärkste Interaktion mit den Elektrodenmassen stattfindet.

Gemäß einem anderen Aspekt ist der kontinuierliche Mischer ein Extruder, wobei der Ausgang im hinteren Abschnitt C als eine Auswurföffnung gebildet ist, die so gestaltet ist, dass die granulatförmige Elektrodenmasse ohne weitere Verdichtung abfließen kann.

Bevorzugt ist die Auswurföffnung somit im Wesentlichen von der Innenwand der Bohrung des Schneckenzylinders begrenzt, in der die wenigstens eine Extruderwelle angeordnet ist.

Vereinfacht ausgedrückt stellt die Auswurföffnung einen offenen Ausgang ohne die sonst übliche Düsenplatte am Extruderausgang dar, aus dem die Elektrodenmasse in flockiger, granulierter Form abgeworfen werden kann.

Dadurch kann ein Austritt der Elektrodenmasse aus dem Extruder ohne weitere Verdichtung durch Einwirken äußerer Kräfte erreicht werden. Ferner kann durch die oben definierte Auswurföffnung eine Düsenwirkung am Extruderausgang vermieden werden. Eine Düsenwirkung am Extruderausgang würde zu einer Kompression der Elektrodenmasse im hinteren Abschnitt C und, aufgrund der abrasiven Eigenschaften der Elektrodenmasse, zu einem übermäßigen Verschleiß des Mischers führen.

Gemäß einem weiteren Aspekt des kontinuierlichen Mischers ist stromabwärts der Auswurföffnung ein Auswurfschacht angeordnet. Dies stellt eine einfache und kostengünstige technische Ausgestaltung dar, die Elektrodenmasse abzuführen und für die weitere Verarbeitung zu sammeln.

Gemäß einem anderen Aspekt des kontinuierlichen Mischers, insbesondere des Extruders, ist stromabwärts der Auswurföffnung ein Gegenlager vorgesehen, in dem die wenigstens eine Extruderwelle gelagert ist. Durch die Anordnung des Gegenlagers stromabwärts der Extruderwelle kann verhindert werden, dass das Gegenlager in Kontakt mit der abrasiven Elektrodenmasse kommt. Außerdem können Vibrationen der Extruderwelle und andere mechanische Belastungen vermieden werden. Folglich kann durch diese Anordnung der Verschleiß der Extruderwelle reduziert werden.

Gemäß einem weiteren Aspekt des kontinuierlichen Mischers, insbesondere des Extruders, erstreckt sich die wenigstens eine Extruderwelle bis zur Auswurföffnung. Mit anderen Worten schließt die Extruderwelle im Wesentlichen bündig mit der Austrittsöffnung ab. Hierdurch kann ein Gegenlager entfallen.

Gemäß einem anderen Aspekt des kontinuierlichen Mischers, insbesondere des Extruders, weist ein Abschnitt der wenigstens einen Extruderwelle im Bereich der Auswurföffnung keine Förderelemente und Mischelemente auf. Hierdurch wird die Elektrodenmasse nicht mehr gefördert und kommt nicht in Kontakt mit einem Gegenlager, sondern verlässt auf einfache Weise den Mischer über die Auswurföffnung.

Gemäß einem weiteren Aspekt des kontinuierlichen Mischers, insbesondere des Extruders, ist wenigstens einem der Abschnitte A, B und C ein Temperaturmodul zugeordnet, das dazu eingerichtet ist, den jeweiligen Abschnitt auf eine vorbestimmte Temperatur zu temperieren, wobei bevorzugt jeder der Abschnitte ein Temperaturmodul aufweist, das unabhängig von den Temperaturmodulen der anderen Abschnitte angesteuert werden kann. Dadurch können verschiedene Temperaturkurven im kontinuierlichen Mischer gefahren werden.

Das Verfahren zum Herstellen von Elektrodenmassen unter Verwendung des kontinuierlichen Produktionssystems umfasst insbesondere die oben beschriebenen Verfahrensschritte a) bis d) des erfindungsgemäßen Dosierverfahrens sowie zusätzlich die folgenden Verfahrensschritte:
e) Mischen des fibrillierfähigen Bindemittels mit weiteren Komponenten der Elektrodenmasse in dem kontinuierlichen Mischer unter Bildung einer gemischten Elektrodenmasse; und
f) Verarbeiten der gemischten Elektrodenmasse unter Fibrillierung des fibrillierfähigen Bindemittels unter Erhalt einer granulatartigen Elektrodenmasse mit fibrilliertem Bindemittel.

Das Verfahren ermöglicht die Herstellung von Elektrodenmassen mit einer gleichbleibenden und hohen Qualität, da die Zugabe von fibrillierfähigen Bindemitteln aufgrund der Verfahrensschritte a) - d) kontinuierlich und mit einer hohen Dosiergenauigkeit erfolgt. Aufgrund der Verfahrensschritte a) - d) des Dosierverfahrens wird das fibrillierfähige Bindemittel bis zur Eingabe in den Mischer vor der Einwirkung von Scherkräften geschützt, sodass eine Agglomeratbildung vermieden und das Bindemittel in einem pulverförmigen Zustand mit definierter Partikelgröße und in konstanter Menge in den Mischer hineindosiert wird. Während des Mischens und Verarbeitens in den Schritten e) und f) bildet das Bindemittel dann Fibrillen aus, wodurch am Ende des Verarbeitungsprozesses eine granulatartige Elektrodenmasse mit fibrilliertem Bindemittel erhalten wird. Derartige Elektrodenmassen zeichnen sich durch eine hohe mechanische Stabilität aus, da das fibrillierte Bindemittel eine Verbundstruktur um die weiteren Elektrodenkomponenten herum bildet und diese zusammenhält.

Die weiteren Komponenten der Elektrodenmasse umfassen insbesondere ein Elektrodenaktivmaterial sowie weitere Additive wie Leitfähigkeitszusätze.

Das Elektrodenaktivmaterial kann entweder ein Kathodenaktivmaterial oder ein Anodenaktivmaterial sein. Bevorzugte Kathodenaktivmaterialien für die Elektrodenmassen umfassen Lithium-Cobalt-Oxid (LCO), Lithium-Nickel-Oxid (LNO), Lithium-Nickel-Cobalt-Aluminium-Oxid (NCA), Lithium-Nickel-Mangan-Cobalt-Oxid (NMC), Lithium-Mangan-Oxid (LMO), Lithium-Eisen-Phosphat (LFP), Lithium-Nickel-Mangan-Oxid (LMR), Lithium-Nickel-Mangan-Oxid-Spinell (LNMO), Preußischblau-Analoga, Preußischweiß-Analoga, insbesondere (Na₂Fe[Fe(CN)₆], Polyanionische Verbindungen, insbesondere Na₃V₂(PO₄)F₃, natriumhaltige Schichtoxide, insbesondere Naₓ[Cu_{y}Fe_{z}Mn_{(1-y-z)}]O₂ sowie Kombinationen davon.

Das Anodenaktivmaterial kann ausgewählt sein aus der Gruppe bestehend aus kohlenstoffhaltigen Materialien, Soft Carbon, Hard Carbon, Naturgraphit, synthetischer Graphit, Silicium, Silicium-Suboxid, Silicium-Legierungen, Lithium, Lithium-Legierungen, Aluminium-Legierungen, Indium, Indium-Legierungen, Zinn, Zinn-Legierungen, Cobalt-Legierungen, Niobpentoxid, Titandioxid, Titanaten, beispielsweise Lithium-Titanate (Li₄Ti₅O₁₂ oder Li₂Ti₃O₇), Zinndioxid, analoge Natriumlegierungen und Mischungen davon.

Weitere Komponenten der Elektrodenmasse umfassen elektrische Leitfähigkeitszusätze, beispielsweise Leitruß, Leitgraphit, sogenannte "carbon nano tubes" (CNT), Kohlefasern und/oder Graphen. Als weitere Komponenten und Zusätze können alle üblichen im Stand der Technik bekannten Verbindungen und Materialien eingesetzt werden.

Im Falle von Festkörper-Energiespeichern können der Elektrodenmasse Festkörperelektrolyte zugesetzt werden, beispielsweise keramische, glaskeramische, polymerbasierte oder gelbasierte Festkörperelektrolyte oder Mischungen davon. Als keramische Festkörperelektrolyte werden insbesondere sulfidische und oxydische Festkörperelektrolyte verwendet.

Zur vollkontinuierlichen Herstellung der Elektrodenmassen können die pulverförmigen weiteren Komponenten der Elektrodenmasse präzise und kontinuierlich unabhängig voneinander oder gemeinsam an verschiedenen Positionen des vorderen Extruderabschnitts zugeführt werden. Die weiteren Komponenten können entweder als vorgemischtes Pulvergemisch oder als reine Pulverkomponenten kontinuierlich in den Extruder dosiert werden. Die Dosierung der pulverförmigen weiteren Komponenten kann an mehreren Stellen des vorderen Abschnitts gleichzeitig erfolgen.

Das fibrillierfähige Bindemittel kann zusammen oder getrennt von den weiteren Komponenten der Elektrodenmasse in den kontinuierlichen Mischer dosiert werden. Bevorzugt wird das fibrillierfähige Bindemittel getrennt und stromabwärts der weiteren Komponenten, und besonders bevorzugt stromabwärts der Leitfähigkeitszusätze in den kontinuierlichen Mischer dosiert. Zur Dosierung des Bindemittels in den kontinuierlichen Mischer kann insbesondere die oben beschriebene Transfereinheit des Bindemitteldosiersystems verwendet werden, wobei der Sammeltrichter der Transfereinheit an den kontinuierlichen Mischer gekoppelt wird.

Das fibrillierfähige Bindemittel und die in den vorderen Abschnitt A zudosierten weiteren Komponenten der Elektrodenmasse werden mit Hilfe der Extruderwellen vorgemischt, und die vorgemischte Elektrodenmasse wird in den mittleren Abschnitt B des Extruders gefördert.

In der Verfahrenszone im mittleren Abschnitt B des Extruders werden die einzelnen Ausgangsmaterialien miteinander distributiv gemischt und dispergiert. Dabei wird das Elektrodenaktivmaterial in die Struktur des elektrisch leitfähigen Additives eingebettet, sodass eine Art Beschichtung des leitfähigen Additives um das Elektrodenaktivmaterial entsteht.

Mit Hilfe eines mechanischen und thermischen Energieeintrags über Scherkräfte und erhöhte Prozesstemperatur wird eine Phasenumwandlung der Bindemittelmoleküle unter Bildung von Fibrillen erzielt. Durch die Umwandlung des Bindemittels bildet sich eine Verbundstruktur mit den restlichen Ausgangskomponenten der Elektrodenmasse aus, in der das fibrillierte Bindemittel die übrigen Komponenten der Elektrodenmasse fein umschließt. Der Fibrillierungsgrad des Bindermittels kann durch das Temperaturprofil im mittleren Abschnitt und/oder durch die Art, Anzahl und Anordnung der Schneckenelemente des Extruders gesteuert werden. Insbesondere sind die Schneckenelemente so ausgelegt, dass im mittleren Abschnitt starke Partikel-Partikel-Interaktionen erreicht werden kann. Diese üben eine hohe Scherwirkung auf das fibrillierfähige Bindemittel aus, die zu einer beschleunigten Fibrillenbildung führt.

Im hinteren Abschnitt C des Extruders wird die Verbundstruktur unter gekühlten Bedingungen zu einer pulverartigen bis granulatartigen und flockigen Elektrodentrockenmasse verarbeitet und über die oben beschriebene Auswurföffnung aus der Verfahrenszone im hinteren Abschnitt C ausgetragen.

Die granulatartige Elektrodenmasse kann in einem Folgeschritt mit Hilfe eines Walzenkalanders unter Druck und Erwärmen zu einer Schicht verpresst und auf einen Stromabnehmer, beispielsweise eine Aluminiumfolie oder Kupferfolie, laminiert werden.

Gemäß einem weiteren Aspekt der Erfindung umfasst das Verfahren zum Herstellen von Elektrodenmassen nach Schritt f) eine Qualitätskontrolle mit den folgenden Verfahrensschritten g) - i):
g) Erfassen wenigstens eines qualitätsrelevanten Parameters in der erhaltenen Elektrodenmasse;
h) Vergleichen des qualitätsrelevanten Parameters mit einem für den qualitätsrelevanten Parameter vorbestimmten Wertebereich, in den als ordnungsgemäß definierte qualitätsrelevante Parameter fallen; und
i) Falls der Vergleich ergibt, dass der Parameter außerhalb des Wertebereichs liegt: Ausgeben eines Warnsignals; Erstellen und Senden eines Reports, in dem der außerhalb des Wertebereichs liegende Parameter hervorgehoben ist; Anpassen eines produktionsrelevanten Parameters, sodass der qualitätsrelevante Parameter in den vordefinierten Wertebereich fällt und/oder Verändern eines Produktflusses, sodass die erhaltene Elektrodenmasse entsorgt wird, wobei, falls der Vergleich ergibt, dass der Parameter innerhalb des Wertebereichs liegt: Freigeben der erhaltenen Elektrodenmasse für weitere Verarbeitungsschritte.

Die hier beschriebenen Verfahrensschritte g) bis i) ermöglichen ein vollautomatisches und kontinuierliches Überprüfen der Elektrodenmasse, wobei im Falle von Auffälligkeiten bei den qualitätsrelevanten Parametern automatisch auf den Produktionsprozess Einfluss genommen werden kann, um diesen entsprechend anzupassen. Des Weiteren können Elektrodenmassen mit nicht behebbaren Mängeln automatisch entsorgt werden. Dies spart Zeit- und Personalkosten ein.

Unter dem Begriff "qualitätsrelevanter Parameter" wird ein Parameter verstanden, der wenigstens eine chemische und/oder physikalische Eigenschaft der Elektrodenmasse darstellt. Insbesondere ist der qualitätsrelevante Parameter ausgewählt aus der Gruppe bestehend aus Rohmaterialdaten; Temperatur der Elektrodenmasse unmittelbar nach Schritt f); Beschaffenheit der Elektrodenmasse unmittelbar nach Schritt f) wie Dimension, Form, Farbe, Oberflächenglanz, Oberflächenrauigkeit und/oder Härte/Weichheit.

Unter einem "produktionsrelevanten Parameter" wird ein Parameter verstanden, der wenigstens einen Verfahrensschritt zur Herstellung der Elektrodenmassen steuert. Bevorzugt ist der produktionsrelevante Parameter ausgewählt aus der Gruppe bestehend aus Prozessparameter des kontinuierlichen Mischers wie Motorleistung, Drehmoment und Prozesstemperatur; Prozessparameter der Folgeschritte, insbesondere des Kalandriervorgangs wie Drehmoment, Motorleistung, Anpressdruck sowie Erscheinungsbild, Dicke und Dichte der Elektrodenmasse auf einem Stromkollektor.

Die Erfindung wird nachfolgend anhand von bevorzugten Ausführungsbeispielen in Bezug auf die beigefügten Zeichnungen näher beschrieben, die jedoch nicht in einem einschränkenden Sinn verstanden werden sollen. In den Zeichnungen zeigen:
- Figur 1 in einer schematischen Darstellung ein erfindungsgemäßes Bindemitteldosiersystem gemäß einer ersten Ausführungsform;
- Figur 2 in einer schematischen Darstellung das Bindemitteldosiersystem aus Figur 1 mit einer Nachfüllsteuerung gemäß einer zweiten Ausführungsform;
- Figur 3 in einer schematischen Darstellung das Bindemitteldosiersystem aus Figur 1 mit einem Kühlturm gemäß einer dritten Ausführungsform;
- Figur 4 in einer schematischen Darstellung das Bindemitteldosiersystem aus Figur 1 mit einem Kühlturm und einem Lagerraum gemäß einer vierten Ausführungsform;
- Figur 5 in einer schematischen Darstellung das Bindemitteldosiersystem aus Figur 1 mit einer Gebinde-Entleerungsstation;
- Figur 6 in einer schematischen Darstellung das Bindemitteldosiersystem aus Figur 1 mit Kühlmodulen;
- Figur 7 in einer schematischen Darstellung das Bindemitteldosiersystem aus Figur 1 mit Kühleinheiten;
- Figuren 8A bis 8E jeweils schematische Darstellungen eines Bindemittelspenders aus den Figuren 1 bis 7;
- Figur 9 in einer schematischen Darstellung ein erfindungsgemäßes Produktionssystem zum Herstellen von Elektrodenmassen mit dem Bindemitteldosiersystem aus Figur 1;

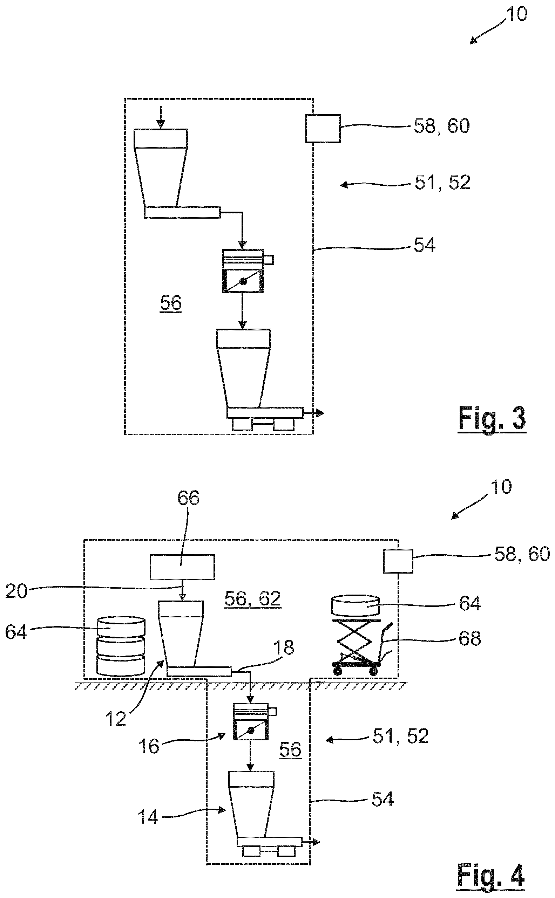

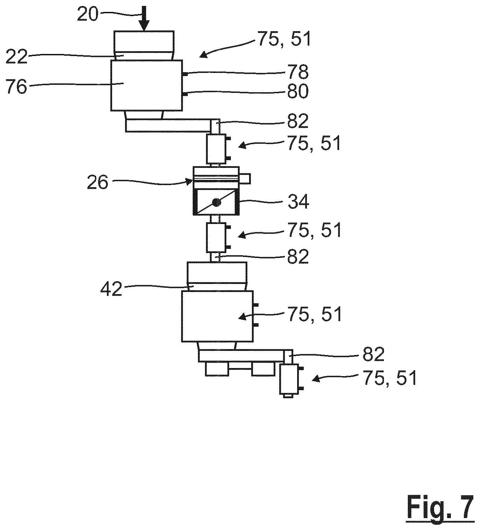

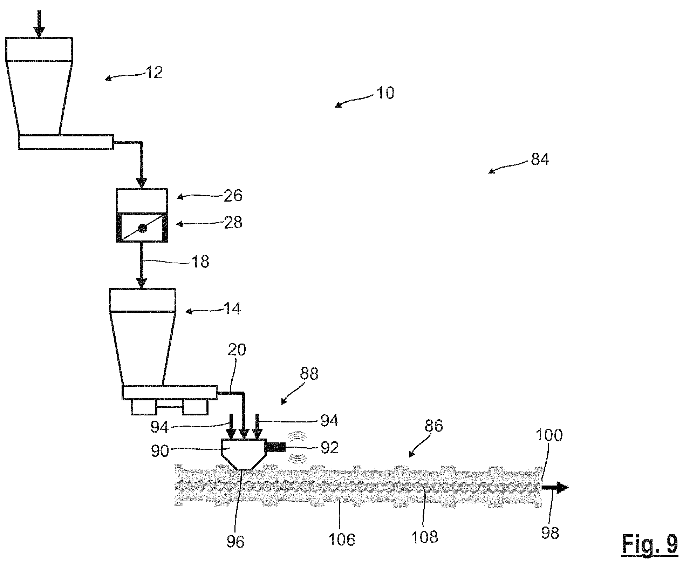

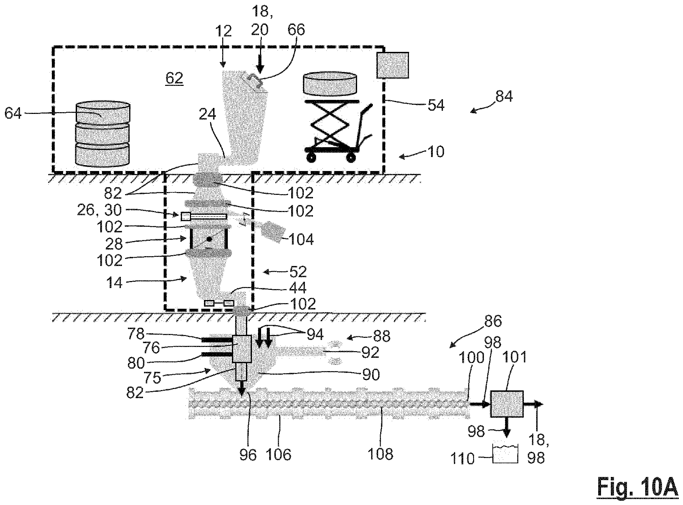

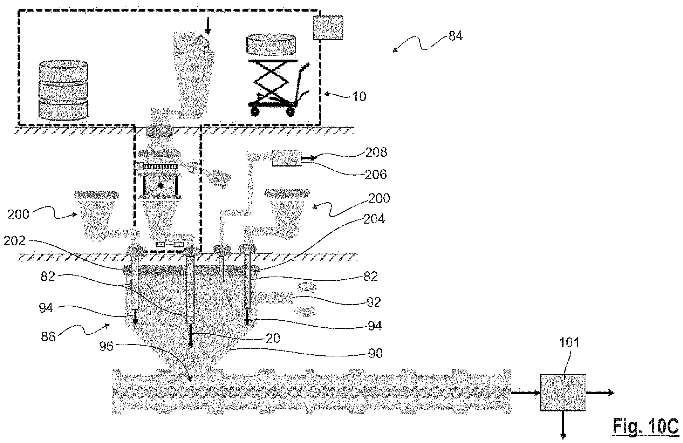

- Figur 10A in einer schematischen Darstellung das Produktionssystem zum Herstellen von Elektrodenmassen aus Figur 9 mit einem Kühlturm und einer Kühleinheit gemäß den Figuren 3 und 7, Figur 10B in einer schematischen Darstellung das Produktionssystem zum Herstellen von Elektrodenmassen aus Figur 9 mit einem Kühlturm und einer Kühleinheit gemäß den Figuren 3 und 7, wobei der Kühlturm sich bis zum Mischer erstreckt, und Fig. 10C in einer schematischen Darstellung das Produktionssystem zum Herstellen von Elektrodenmassen aus Figur 9 mit einem Kühlturm und einer Kühleinheit gemäß den Figuren 3 und 7 sowie zusätzlichen Dosiervorrichtungen für die weiteren Komponenten der Elektrodenmasse in den kontinuierlichen Mischer;
- Figur 11 eine schematische Darstellung eines kontinuierlichen Mischers für ein Produktionssystem gemäß den Figuren 9 und 10 sowie ein Temperatur-Positions-Diagramm für den kontinuierlichen Mischer;
- Figur 12 in einer Vorderansicht einen hinteren Abschnitt C des Mischers aus Fig. 11, mit einer Schnittebene A-A;
- Figur 13 in einer Schnittansicht entlang der Schnittebene A-A aus Figur 12;
- Figur 14 in einer perspektivischen Darstellung den hinteren Abschnitt C des Mischers aus Figur 12;
- Figur 15 in einer perspektivischen Darstellung den hinteren Abschnitt C des Mischers aus Figur 12 gemäß einer alternativen Ausführungsform, mit einer Schnittebene B-B;
- Figur 16 in einer Schnittansicht entlang der Schnittebene B-B aus Figur 15;
- Figur 17 ein schematisches Ablaufdiagramm der Verfahrensschritte für ein erfindungsgemäßes Verfahren zum kontinuierlichen Dosieren eines fibrillierfähigen Bindemittels für die Herstellung von Elektrodenmassen;
- Figur 18A ein schematisches Ablaufdiagramm der Verfahrensschritte für ein Verfahren zum kontinuierlichen Dosieren gemäß Figur 12 mit einem Nachfüllzyklus und Figuren 18B und 18C jeweils eine Dosiertaktung für die erste Dosiervorrichtung, die zweite Dosiervorrichtung und die Nachfüllvorrichtung;
- Figur 19 ein schematisches Ablaufdiagramm der Verfahrensschritte für ein erfindungsgemäßes Verfahren zum Herstellen von Elektrodenmassen; und
- Figur 20A und Figur 20B jeweils elektronenmikroskopische Aufnahmen einer gemischten Elektrodenmasse mit fibrilliertem Bindemittel auf einem Stromkollektor.

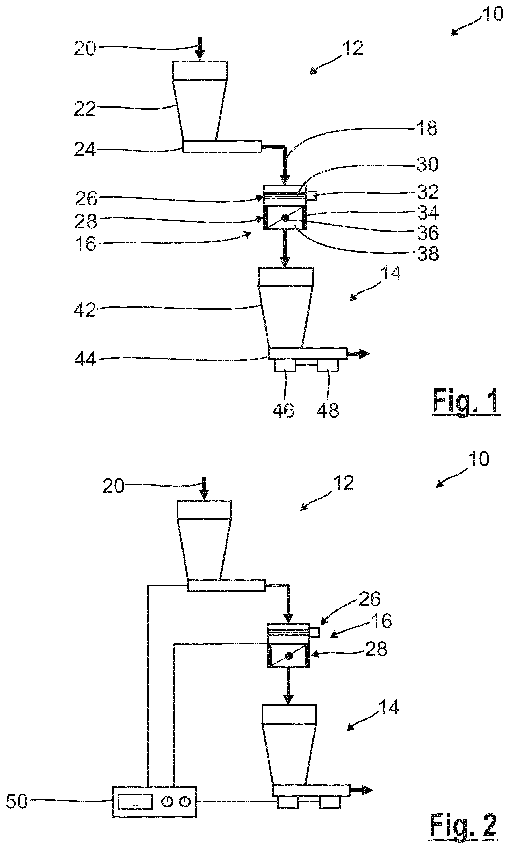

Figur 1 zeigt ein Bindemitteldosiersystem 10 zum kontinuierlichen Dosieren eines fibrillierfähigen Bindemittels für die Herstellung von Elektrodenmassen.

Das Bindemitteldosiersystem 10 umfasst eine erste Dosiervorrichtung 12, eine zweite Dosiervorrichtung 14 und eine Nachfüllvorrichtung 16, die die erste und zweite Dosiervorrichtung 12, 14 in Förderrichtung 18 miteinander verbindet.

Die erste Dosiervorrichtung 12 ist dazu eingerichtet, ein pulverförmiges fibrillierfähiges Bindemittel 20 in die Nachfüllvorrichtung 16 volumetrisch zu dosieren. Dazu umfasst die erste Dosiervorrichtung 12 einen ersten Vorratsbehälter 22, der mit fibrillierfähigem Bindemittel 20 gefüllt werden kann.

Der erste Vorratsbehälter 22 kann beispielsweise als ein trichterförmiger Sammelbehälter ausgeführt sein. Insbesondere ist der erste Vorratsbehälter 22 dazu ausgelegt, ein Volumen von 50 bis 100 I zu fassen, wobei das Volumen etwa 10 bis 25 kg eines fibrillierfähigen Bindemittels mit einer Dichte von 0,3 bis 0,6 kg/l entspricht. Folglich dient der erste Vorratsbehälter 22 als ein Materialspeicher für ein komplettes Gebinde von fibrillierfähigem Bindemittel.

Der erste Vorratsbehälter 22 kann ferner mit einer Vibrationseinheit ausgestattet sein (hier nicht gezeigt), beispielsweise einer Ultraschallsonde, die den ersten Vorratsbehälter 22 in Schwingung versetzen kann.

Unterhalb des ersten Vorratsbehälters 22 ist eine Vibrationsrinne 24 angeordnet, die das fibrillierfähige Bindemittel 20 unter Vermeidung von Scherkräften aus dem ersten Vorratsbehälter 22 mittels Vibration bzw. Schwingung volumetrisch in die Nachfüllvorrichtung 16 dosieren kann. Insofern ist die erste Dosiervorrichtung 12 als ein volumetrischer Dosierer ausgeführt. Alternativ zur Vibrationsrinne 24 kann ein Banddosierer verwendet werden.

Unterhalb der ersten Dosiervorrichtung 12 bzw. in Fließrichtung nachgeschaltet ist die Nachfüllvorrichtung 16 vorgesehen, wobei die Nachfüllvorrichtung 16 dazu eingerichtet ist, fibrillierfähiges Bindemittel 20 aus der Nachfüllvorrichtung 16 in die zweite Dosiervorrichtung 14 nachzufüllen.

Die Nachfüllvorrichtung 16 umfasst eine Trenneinheit 26 sowie einen Bindemittelspender 28, wobei die Trenneinheit 26 zwischen der ersten Dosiervorrichtung 12 und dem Bindemittelspender 28 angeordnet ist. Folglich ist der Bindemittelspender 28 unterhalb der Trenneinheit 26 und oberhalb der zweiten Dosiervorrichtung 14 angeordnet.

Die Trenneinheit 26 ist dazu eingerichtet, eine Grobfraktion mit Agglomeraten des Bindemittels aus dem Bindemittelstrom zu entfernen und eine Partikelfraktion des Bindemittels 20 aus Partikeln mit vorbestimmter Partikelgröße bereitzustellen, sodass die Nachfüllvorrichtung 16 nur die Partikelfraktion mit der vorbestimmten Partikelgröße in die zweite Dosiervorrichtung 14 nachfüllt. Ferner kann ein Bindemittelrestbehälter (nicht gezeigt) vorgesehen sein, um die von der Trenneinheit 26 abgeführte Grobfraktion des Bindemittels aufzunehmen.

Dafür weist die Trenneinheit 26 einen mit einem Trennelement 30 gekoppelten Motor 32 auf, der dazu eingerichtet ist, das Trennelement 30 in Schwingung zu versetzen, sodass auf das Trennelement 30 fallendes Bindemittel 20 aus der ersten Dosiervorrichtung 12 nach der Partikelfraktion mit der vorbestimmten Partikelgröße getrennt werden kann.

Bevorzugt ist das Trennelement 30 ein Vibrationssieb oder Rüttelsieb mit einer Maschenweite von 1 bis 4 mm.

Der Bindemittelspender 28 ist dazu eingerichtet, die Partikelfraktion mit der vorbestimmten Partikelgröße zu sammeln, bevor die Partikelfraktion aus dem Bindemittelspender 28 in die zweite Dosiervorrichtung 14 nachgefüllt wird.

Wie in Figur 1 zu erkennen ist, umfasst der Bindemittelspender 28 einen Auffangbehälter 34 sowie ein Dosierelement 36, das mit dem Auffangbehälter 34 eine gemeinsame Sammelkammer 38 für die zu sammelnde Partikelfraktion mit der vorbestimmten Partikelgröße definiert.

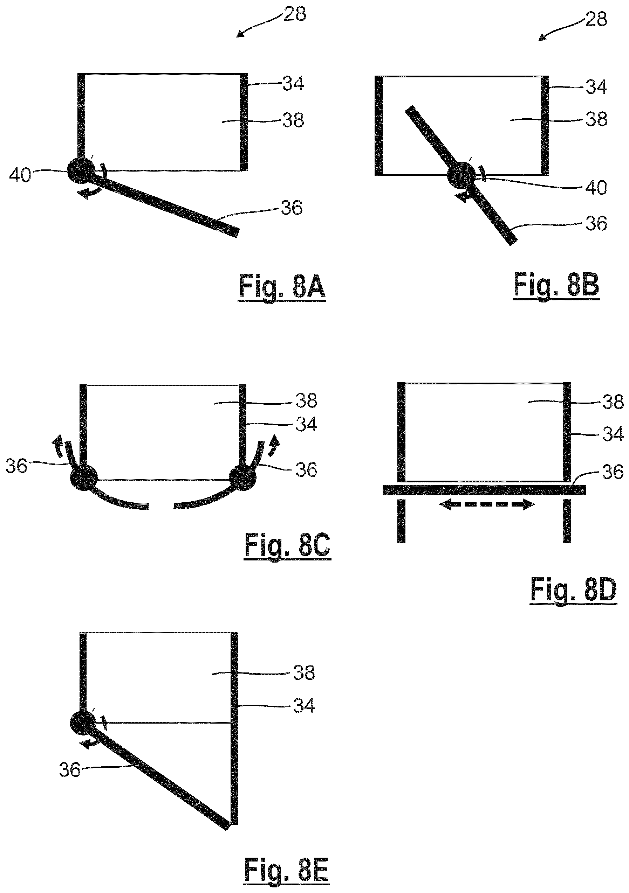

Beispielhafte Ausführungsformen des Bindemittelspenders 28 sind in den Figuren 8A bis 8E gezeigt.

In den Ausführungsformen gemäß den Figuren 8A und 8B bildet der Auffangbehälter 34 eine Aufnahme für das zu sammelnde Bindemittel 20, wobei eine untere Seite des Auffangbehälters 34 von dem Dosierelement 36 in Form einer Dosierklappe verschlossen werden kann.

Wie in den Figuren 8A und 8B gut zu erkennen ist, bildet die Dosierklappe 36 im geschlossenen Zustand des Bindemittelspenders 28 den Boden der Sammelkammer 38 aus. Dem Boden gegenüberliegend ist eine Öffnung vorgesehen, durch welche die Partikelfraktion mit der vorbestimmten Partikelgröße aus der Trenneinheit 26 in den Bindemittelspender 28 hineinfallen kann. Im geschlossenen Zustand des Bindemittelspenders 28 bildet das Dosierelement 36 daher eine physische Barriere zwischen der ersten Dosiervorrichtung 12 und der zweiten Dosiervorrichtung 14.

Die beiden Ausführungsformen des Bindemittelspenders 28 in den Figuren 8A und 8B unterscheiden sich lediglich in der Aufhängung des Dosierelements 36. In Figur 8A rotiert die Dosierklappe 36 um eine Achse 40, die seitlich als ein Bestandteil der Seitenwand des Auffangbehälters 34 ausgebildet ist, wohingegen in Figur 8B die Dosierklappe 36 um eine Achse 40 rotiert, die zentral mittig durch die Sammelkammer 38 verläuft.

Das Dosierelement 36 kann auch als eine Dosierschaufel ausgebildet sein. Dies ist schematisch in Figur 8C gezeigt. Konkret bilden zwei Dosierschaufeln eine napfförmige Aufnahme für da zu sammelnde Bindemittel. Um das Bindemittel freizugeben, werden die Dosierschaufeln seitlich wegbewegt oder weggeklappt, sodass sich eine Durchgangsöffnung bildet, durch die das Bindemittel in die zweite Dosiervorrichtung 14 fallen kann.

Denkbar ist auch wie in Figur 8D gezeigt, dass das Dosierelement 36 als ein Dosierschieber ausgeführt. Der Dosierschieber kann plattenförmig sein, beispielsweise in Form eines Diskus, und eine ebene Sammelfläche für das Bindemittel bilden. Durch ein seitliches Verschieben des Dosierschiebers kann das Bindemittel freigegeben werden.

Gemäß Figur 8E kann das Dosierelement 36 auch als eine Dosierklappe ähnlich wie in Figur 8A ausgebildet sein, aber mit dem Unterschied, dass ein Wandabschnitt des Auffangbehälters 34 nach unten in Richtung der zweiten Dosiervorrichtung 14 verlängert ist. Zwischen der Dosierklappe und dem verlängerten Wandabschnitt ist daher eine spitz nach unten zulaufende Sammelkammer 38 gebildet.

Auch der Bindemittelspender 28 kann mit einer Vibrationseinheit ausgestattet sein (hier nicht gezeigt), beispielsweise einer Ultraschallsonde, die den Bindemittelspender 28 in Schwingung versetzen kann.

Wie weiter in Fig. 1 gezeigt, ist die zweite Dosiervorrichtung 14 unterhalb der Nachfüllvorrichtung 16, insbesondere unterhalb des Bindemittelspenders 28, vorgesehen und dazu eingerichtet, das fibrillierfähige Bindemittel 20 in einen kontinuierlichen Mischer (hier nicht gezeigt) kontinuierlich, gravimetrisch zu dosieren.

Die zweite Dosiervorrichtung 14 umfasst einen zweiten Vorratsbehälter 42, in dem das fibrillierfähige Bindemittel 20 aus dem Bindemittelspender 28 nachgefüllt wird. Bevorzugt ist der zweite Vorratsbehälter 42 dazu ausgelegt, ein Volumen von 1 bis 20 L zu fassen, das einer Menge von 0,25 - 5 kg Bindemittel entspricht. Grundsätzlich sind die Dimensionen des zweiten Vorratsbehälters auf den Gesamtdurchsatz des Produktionssystems abgestimmt.

Der zweite Vorratsbehälter 42 kann ferner mit einer Vibrationseinheit ausgestattet sein (hier nicht gezeigt), beispielsweise einer Ultraschallsonde, die den zweiten Vorratsbehälter 42 in Schwingung versetzen kann.

Unterhalb des zweiten Vorratsbehälters 42 ist eine gravimetrische Vibrationsrinne 44 vorgesehen, die dazu eingerichtet ist, das fibrillierfähige Bindemittel 20 unter Vermeidung von Scherkräften aus dem zweiten Vorratsbehälter 42 in einen kontinuierlichen Mischer (hier nicht gezeigt) gravimetrisch, kontinuierlich zu dosieren. Bevorzugt ist die gravimetrische Vibrationsrinne 44 dazu eingerichtet, einen Durchsatz von 0,5 bis 100 kg pro Stunde an fibrillierfähigem Bindemittel 20 zu ermöglichen. Anstelle der Vibrationsrinne 44 kann ein Bandförderer eingesetzt werden.

Ferner ist die gravimetrische Vibrationsrinne 44 mit einer Waage 46 ausgestattet, mit welcher der Gewichtsverlust pro Zeiteinheit an fibrillierfähigem Bindemittel 20 im zweiten Vorratsbehälter 42 erfasst werden kann. Die Waage 46 ist dazu eingerichtet, die Gesamtmenge an Bindemittel 20 im zweiten Vorratsbehälter 42 zu erfassen.

Die Waage 46 ist informationsaustauschend mit einer gravimetrischen Dosiersteuerung 48 verbunden, die dazu eingerichtet ist, einen Dosierparameter der Vibrationsrinne 44 kontinuierlich nachzuregeln, sodass ein konstanter Materialaustrag aus der Vibrationsrinne 44 erfolgt. Hierzu empfängt die gravimetrische Dosiersteuerung 48 den Gewichtsverlust pro Zeiteinheit in Form eines Ist-Werts von der Waage 46, wobei die gravimetrische Dosiersteuerung 48 den empfangenen Ist-Wert mit einem gespeicherten Soll-Wert vergleicht, wobei im Falle einer Abweichung zwischen Ist- und Soll-Wert, die gravimetrische Dosiersteuerung 48 einen Dosierparameter der Vibrationsrinne 44 verändert, sodass der Ist-Wert sich dem gespeicherten Soll-Wert annähert. Anstatt fester Werte können auch Soll- und Ist-Bereiche verwendet werden.

Als Dosierparameter kann beispielsweise die Vibrationsintensität bzw. die Vibrationsfrequenz der gravimetrischen Vibrationsrinne 44 verwendet werden. Insofern ist die gravimetrische Dosiersteuerung 48 als eine "Closed-Loop"-Regeleinheit ausgebildet.

Das erfindungsgemäße Bindemitteldosiersystem 10 weist zusätzlich eine Kühlvorrichtung auf, die in Figur 1 aus Gründen der Übersichtlichkeit nicht gezeigt ist. Die Kühlvorrichtung wird weiter unten mit Bezug auf die Figuren 3 bis 7 erläutert.

Figur 2 zeigt das Bindemitteldosiersystem 10 aus Figur 1, mit dem Unterschied, dass ferner eine Nachfüllsteuerung 50 vorgesehen ist, die informationsaustauschend mit der ersten Dosiervorrichtung 12, der zweiten Dosiervorrichtung 14 und der Nachfüllvorrichtung 16 verbunden ist.

Insbesondere ist die Nachfüllsteuerung 50 mit der gravimetrischen Dosiersteuerung 48 der zweiten Dosiervorrichtung 14 informationsaustauschend verbunden, sodass diese von der gravimetrischen Dosiersteuerung 48 ein Steuerungssignal empfangen kann, woraufhin die Nachfüllsteuerung 50 die erste Dosiervorrichtung 12 und die Nachfüllvorrichtung 16 ansteuern kann, um einen Nachfüllzyklus zu initiieren, wodurch die zweite Dosiervorrichtung 14 mit fibrillierfähigem Bindemittel 20 versorgt wird. Der Nachfüllzyklus wird weiter unten detailliert beschrieben.

Um die Fließeigenschaften des fibrillierfähigen Bindemittels 20 und damit die Dosiergenauigkeit des Bindemitteldosiersystems 10 zu verbessern, ist es vorteilhaft, die vorgenannten Vorrichtungen 12, 14, 16 zu kühlen und ein Umgebungsklima mit einer geringen Luftfeuchtigkeit bereitzustellen, wie in der nachfolgenden Beschreibung der Ausführungsformen gemäß den Figuren 3 bis 7 gezeigt. Eine Kombination der einzelnen Ausführungsformen ist ebenfalls im Sinne der Erfindung.

Figur 3 zeigt das Bindemitteldosiersystem aus Figur 1 mit einer Kühlvorrichtung 51, wobei das Bindemitteldosiersystem vollständig in einem Kühlturm 52 eingehaust ist.

Der Kühlturm 52 umfasst ein Kühlgehäuse 54, welches das Bindemitteldosiersystem 10 vollständig umgibt und damit von der Umgebung abkapselt. Innerhalb des Kühlgehäuses 54 befindet sich eine das Bindemitteldosiersystem 10 unmittelbar umgebende Kühlkammer 56, die mit dem Bindemitteldosiersystem 10 temperaturaustauschend und klimatisch in Kontakt steht und eine Umgebungstemperatur von 1 - 18°C aufweist, bevorzugt von 5 - 15°C, ganz besonders bevorzugt von 4 - 10°C.

Für die Kühlung ist am Kühlgehäuse 54 eine Temperiereinheit 58 vorgesehen, die dazu eingerichtet ist, die Umgebungstemperatur innerhalb der Kühlkammer 56 zu regulieren.

Ferner kann zusätzlich oder alternativ zur Temperiereinheit 58 eine Klimaeinheit 60 vorgesehen sein, die ebenfalls am Kühlgehäuse 54 angeordnet und dazu eingerichtet ist, ein Umgebungsklima innerhalb der Kühlkammer 56 zu regulieren, insbesondere die Luftfeuchtigkeit. Es ist auch denkbar, dass die Temperiereinheit 58 und die Klimaeinheit 60 gemeinsam als eine Einheit ausgeführt sind.

Besonders bevorzugt weist die Luftfeuchtigkeit innerhalb der Kühlkammer 56 einen Taupunkt kleiner als 0°C auf, besonders bevorzugt -10°C, ganz besonders bevorzugt -20°C.

Da die Vorrichtungen 12, 14, 16 nicht hermetisch von der Kühlkammer 56 abgekapselt sind, entspricht die Umgebungstemperatur und das Umgebungsklima innerhalb der Kühlkammer 56 auch der Temperatur und den klimatischen Bedingungen innerhalb der vorgenannten Vorrichtungen.

Figur 4 zeigt ebenfalls das Bindemitteldosiersystem aus Figur 1, das wie in Figur 3 in einem Kühlturm 52 eingehaust ist. Im Unterschied zur Figur 3 ist in Figur 4 zusätzlich ein Lagerraum 62 vorgesehen, der einen Teil der Kühlkammer 56 bildet und somit ebenfalls vom Kühlgehäuse 54 umgeben ist.

Im Lagerraum 62 befindet sich lediglich die erste Dosiervorrichtung 12 sowie mehrere Gebinde 64 mit fibrillierfähigem Bindemittel 20. Die Nachfüllvorrichtung 16 und die zweite Dosiervorrichtung 14 sind in einem Seitenarm des Kühlgehäuses 54 angeordnet, der sich nach unten vom Lagerraum 62 weg und in Förderrichtung 18 erstreckt.

Vorteilhafterweise kann im Lagerraum 62 gelagertes Gebinde 64 mit fibrillierfähigem Bindemittel 20 bereits vor der Eingabe in das Bindemitteldosiersystem 10 auf eine vorbestimmte Temperatur temperiert werden.

Das im Lagerraum 62 gelagerte Gebinde 64 kann über eine Förderstation 66 in die erste Dosiervorrichtung 12 hineingegeben werden. Die Förderstation 66 kann eine einfache Luke sein, die manuell mit Gebinde 64 durch einen im Lagerraum verfahrbaren Transportwagens 68 befüllt werden kann.

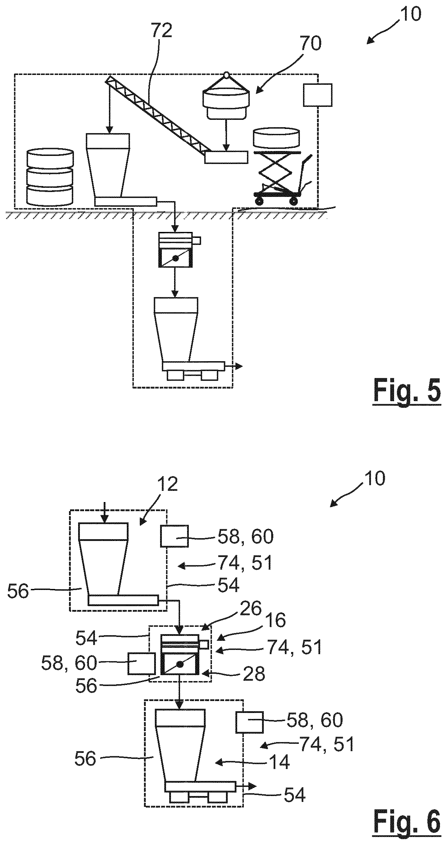

Die Förderstation 66 kann auch vollautomatisch ausgeführt sein, beispielsweise als eine Gebinde-Entleerungsstation 70 oder eine Vakuumförderstation (hier nicht gezeigt). Im ersten Fall kann das Entleeren der Gebinde 64 über einen als Banddosierer 72 ausgeführte Gebinde-Entleerungsstation 70 durchgeführt werden. Diese Ausführungsform ist in Figur 5 gezeigt.

In Figur 6 ist ebenfalls das Bindemitteldosiersystem 10 aus Figur 1 gezeigt, wobei die Kühlvorrichtung 51 anstelle eines einzigen Kühlturms 52 mehrere Kühlmodule 74 umfasst. Grundsätzlich weist jedes Kühlmodul 74 den gleichen Aufbau auf wie der Kühlturm 52 aus Figur 3. Insofern wird auf die vorstehende Beschreibung verwiesen.

Im Unterschied zum Kühlturm 52 umgeben die einzelnen Kühlmodulen 74 nicht das gesamte Bindemitteldosiersystem 10, sondern diese umgeben jeweils einzeln die verschiedenen Vorrichtungen 12, 14, 16. Lediglich die Verbindungen zwischen den einzelnen Vorrichtungen werden von den Kühlmodulen 74 ausgespart. Dies bietet den Vorteil, dass jede Vorrichtung des Bindemitteldosiersystems separat von den anderen Vorrichtungen gekühlt werden kann. Zudem können die klimatischen Bedingungen unabhängig voneinander reguliert werden.

Eine weitere Kühlvorrichtung 51 ist in Figur 7 gezeigt, bei der die einzelnen Vorrichtungen 12, 14, 16 jeweils mit einer Kühleinheit 75 versehen sind.

Jede Kühleinheit 75 umfasst einen Kühlmantel 76, der mit einem Kühlflüssigkeitseingang 78 und einem Kühlflüssigkeitsausgang 80 ausgestattet ist. Die Kühleinheiten 75 können jeweils an einen gemeinsamen Kühlkreislauf angeschlossen werden (hier nicht gezeigt), von dem aus ein Kühlmittel die verschiedenen Kühleinheiten durchströmen und damit auf eine vorbestimmte Temperatur temperieren kann. Alternativ können die Kühleinheiten 75 jeweils an separate Kühlkreisläufe angeschlossen sein, um die jeweiligen Kühleinheiten 75 unabhängig voneinander und wahlweise unter verschiedenen Bedingungen zu kühlen und/oder zu klimatisieren.

Beispielsweise können die Kühleinheiten 75 jeweils dem ersten Vorratsbehälter 22 sowie dem zweiten Vorratsbehälter 42 sowie dem Auffangbehälter 34 und der Trenneinheit 26 zugeordnet sein.

Ferner können die Kühleinheiten 75 auch den Rohrelementen 82 zugeordnet sein, welche jeweils die erste Dosiervorrichtung 12 mit der Nachfüllvorrichtung 16 sowie die Nachfüllvorrichtung 16 mit der zweiten Dosiervorrichtung 14 verbinden. Auch ein der zweiten Dosiervorrichtung 14 nachgeschaltetes Rohrelement 82 kann mit einer Kühleinheit 75 versehen sein, wodurch das aus der zweiten Dosiervorrichtung 14 gravimetrisch dosierte Bindemittel 20 ebenfalls gekühlt wird, bevor dieses in einen kontinuierlichen Mischer gelangt.

Geeignete Kühleinheiten 75 stellen beispielsweise Kühlmanschetten dar, welche die vorgenannten Bauteile umfangsmäßig wenigstens teilweise, bevorzugt vollständig, umschließen können.

Figur 9 zeigt ein Produktionssystem 84 zum Herstellen von Elektrodenmassen, mit dem Bindemitteldosiersystem 10 aus Figur 1 sowie einen kontinuierlichen Mischer 86. Der kontinuierliche Mischer 86 ist mit der zweiten Dosiervorrichtung 14 in Förderrichtung 18 gekoppelt, die den Mischer 86 kontinuierlich mit Bindemittel 20 versorgt. Die Kühlvorrichtung 51 ist aus Gründen der Übersichtlichkeit hier nicht dargestellt.

Bei dem in Figur 9 gezeigten kontinuierlichen Mischer 86 handelt es sich um einen Extruder. Besonders bevorzugt ist der kontinuierliche Mischer 86 ein gleichläufiger Doppelwellenextruder. Der Aufbau des Mischers 86 wird weiter unten beschrieben.

Zwischen der zweiten Dosiervorrichtung 14 und dem kontinuierlichen Mischer 86 ist eine Transfereinheit 88 vorgesehen, die wenigstens einen Sammeltrichter 90 sowie eine an den Sammeltrichter 90 gekoppelte Vibrationseinheit 92 umfasst.

Die Vibrationseinheit 92 ist dazu eingerichtet, während des Überführens von fibrillierfähigem Bindemittel 20 aus der zweiten Dosiervorrichtung 14 in den kontinuierlichen Mischer 86 den Sammeltrichter 90 in Schwingung zu versetzen. Anstelle eines Sammeltrichters 90 kann auch ein Rohrelement 82 (hier nicht gezeigt) verwendet werden. Bevorzugt umfasst die Vibrationseinheit 92 eine Ultraschallsonde.

Figur 10A zeigt ein Produktionssystem 84 zum Herstellen von Elektrodenmassen gemäß einer bevorzugten Ausführungsform, wobei das Bindemitteldosiersystem 10 gemäß der Ausführungsform nach Figur 4 einen Lagerraum 62 aufweist, der zusammen mit dem übrigen Bindemitteldosiersystem 10 in einem Kühlturm 52 eingehaust ist. Darüber hinaus ist zusätzlich eine Kühleinheit 75 vorgesehen, die einem Rohrelement 82 zugeordnet ist, das die Vibrationsrinne 44 der zweiten Dosiervorrichtung 14 in Förderrichtung 18 mit dem Sammeltrichter 90 der Transfereinheit 88 verbindet und vorzugsweise zentral in den Sammeltrichter 90 hineinragt. Auf diese Weise kann eine Kühlung des fibrillierten Bindemittels 20 bis in den Sammeltrichter 90 hinein gewährleistet werden.

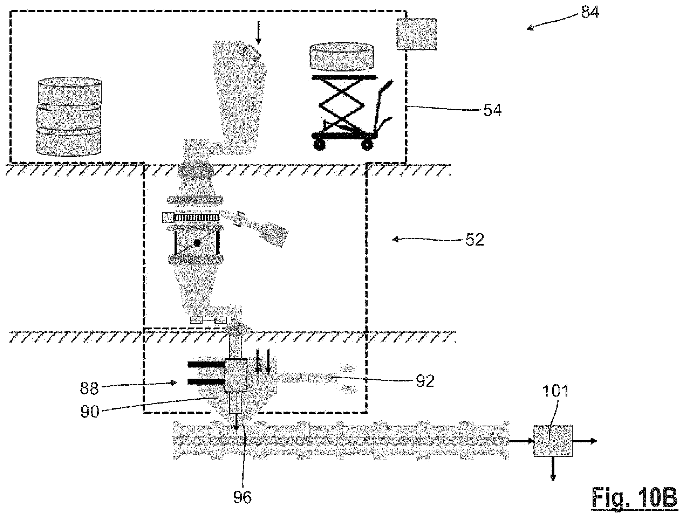

Alternativ kann das Produktionssystem 84 zum Herstellen von Elektrodenmassen wie in Figur 10B ausgeführt sein. Im Unterschied zu Figur 10A ist die Transfereinheit 88 mit dem Sammeltrichter 90 ebenfalls durch den Kühlturm 52 eingehaust. Der Kühlturm 52 erstreckt sich folglich bis zum Mischer 86.

Die weiteren Komponenten für die Elektrodenmasse 94 können mittels wenigstens einer zusätzlichen Dosiervorrichtung 200, die ebenfalls in den Sammeltrichter 90 mündet, hinzugegeben werden. Diese Ausführungsform ist in Figur 10C dargestellt.

Beispielsweise können die weiteren Komponenten ausgewählt sein aus der Gruppe bestehend aus Kathodenaktivmaterial, Anodenaktivmaterial sowie Leitfähigkeitszusätze.

Die zusätzlichen Dosiervorrichtungen 200 können ähnlich aufgebaut sein, wie das Bindemitteldosiersystem 10. Bevorzugt umfassen diese eine erste und/oder eine zweite Dosiervorrichtung wie vorstehend für das Bindemitteldosiersystem 10 beschrieben. Insofern wird auf die obige Beschreibung verwiesen. Eine Nachfüllvorrichtung sowie eine Kühleinheit können bei scherunempfindlichen Materialien wie Kathodenaktivmaterial, Anodenaktivmaterial und Leitfähigkeitszusätze entfallen.

Der Sammeltrichter 90 kann mit einem Deckel 202 verschlossen sein, der einzelne Öffnungen 204 für die verschiedenen Dosiervorrichtungen 10, 200 aufweist.

Ferner ist der Sammeltrichter 90 strömungsmäßig mit einer selbstreinigenden Aspirationseinheit 206 verbunden, die dazu eingerichtet ist, Abluft 208 aus dem Sammeltrichter 90 abzusaugen.

Darüber hinaus kann die Aspirationseinheit 206 dazu eingerichtet sein, einen Unterdruck im Sammeltrichter 90 anzulegen. Dadurch kann die Förderung von Bindemittel aus dem Bindemitteldosiersystem 10 in den Sammeltrichter 90 hinein verbessert werden. Bevorzugt mündet das Bindemitteldosiersystem 10 über ein vorzugweise gekühltes Fallrohr 82 zentral, mittig in den Sammeltrichter 90, und die zusätzlichen Dosiervorrichtungen 200 für die weiteren Elektrodenkomponenten 94 sind um das Fallrohr 82 herum angeordnet. Besonders bevorzugt ist die Öffnung des Fallrohrs 82 direkt über dem Auslass des Sammeltrichters 90 platziert.

Die zusätzlichen Dosiervorrichtungen 200 für die weiteren Elektrodenkomponenten 94 münden ebenfalls mit einem Fallrohr 82 in den Sammeltrichter 90.

Das fibrillierfähige Bindemittel 20 kann nach der Transfereinheit 88 zusammen mit den weiteren Komponenten 94 über einen Einlass 96 in den kontinuierlichen Mischer 86 dosiert werden.

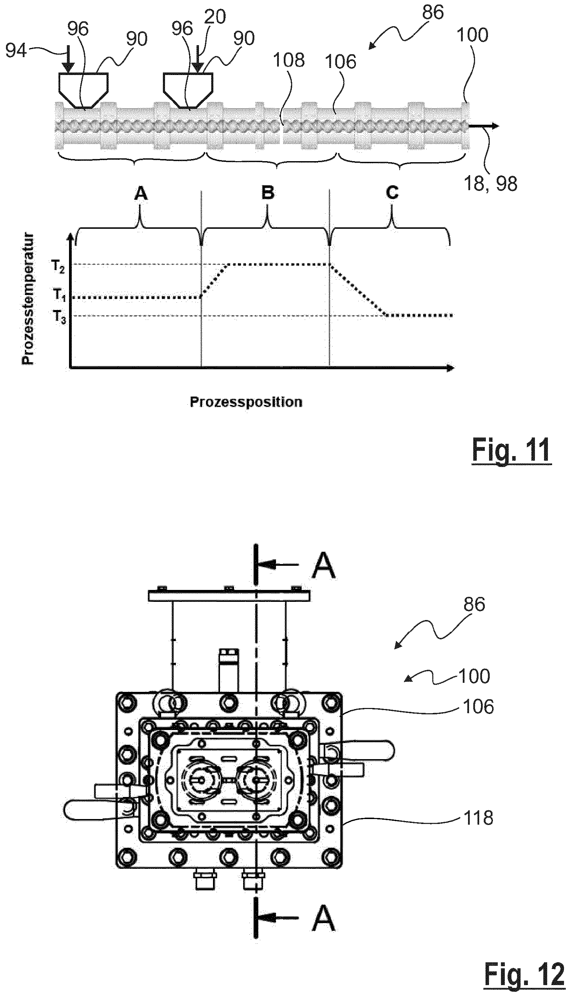

Gemäß einer alternativen Ausführungsform wird das fibrillierfähige Bindemittel 20 über einen separaten Sammeltrichter 90 in den kontinuierlichen Mischer eingebracht, der bevorzugt stromabwärts der den zusätzlichen Dosiervorrichtungen 200 zugeordneten Sammeltrichter 90 für die weiteren Komponenten 94 angeordnet ist. Eine solche Ausführungsform ist schematisch in Fig. 11 dargestellt.

Im kontinuierlichen Mischer 86 wird das fibrillierfähige Bindemittel 20 mit den weiteren Komponenten 94 der Elektrodenmasse gemischt und verarbeitet, insbesondere, homogenisiert, geknetet, fibrilliert und granuliert, wodurch die granulatartige Elektrodenmasse mit fibrilliertem Bindemittel 98 erhalten wird, die über einen Ausgang 100 aus dem Mischer 86 abgeführt werden kann.

Der Ausgang 100 des kontinuierlichen Mischers kann mit einer Qualitätskontrolleinheit 101 gekoppelt sein, die dazu eingerichtet ist, die Elektrodenmasse mit fibrilliertem Bindemittel 98 auf ihre Qualität zu überprüfen und wahlweise Einfluss auf den Dosier- und/oder Herstellungsprozess zu nehmen. Die Funktionsweise der Qualitätskontrolleinheit 101 wird weiterer unten genauer beschrieben.

Wahlweise kann die Elektrodenmasse mit fibrilliertem Bindemittel 98, welche die Qualitätskontrolle nicht bestanden hat oder als Abfallprodukt eines Folgeprozesses anfällt, über eine zusätzliche Dosiervorrichtung 200 über einen Einlass 96 in den kontinuierlichen Mischer 86 dosiert werden und mit dem Bindemittel 20 und den weiteren Komponenten 94 zu einer frischen Elektrodenmasse mit fibrilliertem Bindemittel 98 verarbeitet werden.

Darüber hinaus kann das Produktionssystem 84 gemäß den Figuren 10A bis 10C weitere Elemente umfassen, um ein möglichst exaktes Dosieren des Bindemittels 20 in den kontinuierlichen Mischer 86 zu erreichen.

Beispielsweise können mehrere Wiegebälge 102 vorgesehen sein, die jeweils zwischen der ersten Dosiervorrichtung 12 und der Nachfüllvorrichtung 16 sowie zwischen der Nachfüllvorrichtung 16 und der zweiten Dosiervorrichtung 14 angeordnet sind. Ferner befinden sich Wiegebälge 102 zwischen der Trenneinheit 26 und dem Bindemittelspender 28 sowie zwischen der zweiten Dosiervorrichtung 14 und der Transfereinheit 88. Die Wiegebälge 102 dienen dazu, die vorgenannten Komponenten vibratorisch voneinander zu entkoppeln, um ein möglichst störungsfreies Dosieren mittels der ersten und zweiten Dosiervorrichtung 12, 14 zu gewährleisten.

Ferner erstrecken sich nach den Vibrationsrinnen 24, 44 in Förderrichtung 18 ausschließlich vertikal verlaufende Rohrelemente 82, um Engstellen sowie Toträume für die Anlagerung von Bindemittel 20 zu vermeiden.

Die Innenwände der Rohrelemente 82 sowie der einzelnen vorgenannten Vorrichtungen 12, 14, 16 können wenigstens teilweise, bevorzugt vollständig, mit einer Beschichtung versehen sein, um ein möglichst gutes Fließverhalten des Bindemittels 20 innerhalb des Bindemitteldosiersystems 10 zu erreichen. Ist beispielsweise das Bindemittel PTFE, so kann besonders bevorzugt eine Beschichtung aus PTFE bzw. auf Basis von PTFE gewählt werden.

Die produktberührenden Oberflächen der Vorrichtungen 12, 14, 16 und wahlweise der Transfereinheit 88 können als spiegelpolierte Oberflächen ausgeführt sein. Ferner können die Behälter und Rohrelemente der Vorrichtungen 12, 14, 16 mit Vibrationselementen wie Ultraschallsonden (nicht gezeigt) versehen sein, um mögliche Anhaftungen des Bindemittels schonend und scherarm zu entfernen.

Weiter können die Behälter und Rohrelemente der Vorrichtungen 12, 14, 16 jeweils Innenwände mit einer Vielzahl von Öffnungen aufweisen, durch die ein Gasstrom entlang der Innenwände erzeugt werden kann. Dadurch kann ein Gaskissen bereitgestellt werden, um Ablagerungen an den Innenwänden zu verhindern. Das Gas kann ausgewählt sein aus der Gruppe bestehend aus Stickstoff, Luft sowie Kombinationen davon. Das Gas ist vorzugsweise getrocknet.

Zudem kann dem Trennelement 30 ein Bindemittelrestbehälter 104 zugeordnet sein, in welchem grobkörnige Bindemittelreste, insbesondere Verklumpungen und Agglomerate gesammelt werden, die nicht der Partikelfraktion des Bindemittels mit vorbestimmter Partikelgröße entsprechen und aus dem Bindemittelstrom entfernt wurden. Diese können aufbereitet und wieder der ersten Dosiervorrichtung 12 zugeführt werden.

Nachfolgend wird anhand von Figur 11 näher auf den Aufbau des kontinuierlichen Mischers 86 eingegangen, der in den gezeigten Ausführungsformen als Extruder ausgebildet ist.

Wie bereits weiter oben erläutert wurde, erfolgt der Eintrag des fibrillierfähigen Bindemittels 20 sowie der weiteren Elektrodenkomponenten 94 über einen Einlass 96 am Gehäuse 106 des Mischers 86, das sich in Förderrichtung 18 vom Einlass 96 zum Ausgang 100 erstreckt. Das Gehäuse 106 weist eine rohrartige Form auf und beinhaltet wenigstens eine Extruderwelle 108, bevorzugt zwei gleichläufige Extruderwellen 108, die sich parallel zur Förderrichtung 18 über die gesamte Länge des Gehäuses 106 erstrecken.

Der Mischer 86 ist vorzugsweise modular aus mehreren, hintereinander angeordneten Modulgehäusen aufgebaut. Insbesondere weist der Mischer zwischen 8 und 14 Modulgehäuse auf.

Der Ausgang 100 ist ferner strömungsmäßig mit der Qualitätskontrolleinheit 101 verbunden, von der aus in Förderrichtung 18 die Elektrodenmasse nach bestandener Qualitätskontrolle weitergeführt werden kann (Fig. 10A). Seitlich davon zweigt eine weitere Förderrichtung ab, die in einen Entsorgungsbehälter 110 mündet, in den Elektrodenmassen entsorgt werden können, die die Qualitätskontrolle der Qualitätskontrolleinheit 101 nicht bestanden haben. Wahlweise kann die Elektrodenmasse mit fibrilliertem Bindemittel 98, welche die Qualitätskontrolle nicht bestanden hat, dem Prozess wieder zugefügt werden.

Der Einlass 96 ist in einem vorderen Abschnitt A des kontinuierlichen Mischers 86 angeordnet. Stromabwärts des vorderen Abschnitts A des Mischers 86 folgen nacheinander in Förderrichtung 18 ein mittlerer Abschnitt B und ein hinterer Abschnitt C, wobei im hinteren Abschnitt C der Ausgang 100 angeordnet ist.

Wahlweise kann die Eingabe des Bindemittels 20 sowie der weiteren Komponenten 94 der Elektrodenmasse über einen zusätzlichen Einlass 96 erfolgen, der ebenfalls im vorderen Abschnitt A vorgesehen ist. Beispielsweise kann das Bindemittel 20 separat, also von den weiteren Komponenten 94 getrennt, dosiert werden. Alternativ oder zusätzlich können die Komponenten 94 bzw. das Bindemittel 20 auch über einen separaten Einlass (hier nicht gezeigt) im mittleren Abschnitt B hinzugegeben werden. Der Zugabe kann beispielsweise über einen separaten "Side Feeder" mit Seitenfüllung erfolgen. Eine Rückführung der Elektrodenmasse mit fibrilliertem Bindemittel 98, welches die Qualitätskontrolle nicht bestanden hat oder als Ausschuss der nachgelagerten Prozessschritte anfällt, erfolgt bevorzugt in den Abschnitten B oder C des kontinuierlichen Mischers 86.

Besonders bevorzugt werden die verschiedenen Abschnitte A, B und C unabhängig voneinander temperiert, beispielsweise durch Temperaturmodule (hier nicht gezeigt). Dies ist schematisch im unteren Abschnitt von Figur 11 gezeigt, in der ein Temperatur-Prozessposition-Diagramm gezeigt ist, das im Wesentlichen den Temperaturverlauf des in Figur 11 gezeigten Mischers 86 darstellt.

Bevorzugt ist die Temperatur T₁ im vorderen Abschnitt A zwischen 10 - 250°C. Dabei wird die Temperatur T₁ insbesondere so gewählt, dass das fibrillierfähige Bindemittel 20 noch kein durchgehendes Fibrillennetzwerk um die übrigen Elektrodenkomponenten 94 ausbildet. In diesem Abschnitt erfolgt das Mischen des fibrillierfähigen Bindemittels 20 mit den weiteren Komponenten 94 der Elektrodenmasse.

Bevorzugt liegt die Temperatur T₂ im mittleren Abschnitt B in einem Bereich von 50 - 250°C. Insbesondere wird die Temperatur so gewählt, dass das fibrillierfähige Bindemittel 20 ein Fibrillennetzwerk ausbildet. In diesem Abschnitt werden die weiteren Komponenten 94 der Elektrodenmasse mit dem fibrillierfähigen Bindemittel 20 zu einer Elektrodenmasse mit fibrilliertem Bindemittel 98 geknetet. Wie anhand von Figur 11 gezeigt, ist besonders bevorzugt die Temperatur im Abschnitt B gleich oder höher als die Temperatur im Bereich A, das heißt es gilt: T₂ ≥ T₁.

Bevorzugt ist die Temperatur T₃ im hinteren Abschnitt C kleiner als die Temperatur im Abschnitt B. Beispielsweise kann die Temperatur im hinteren Abschnitt C auf einen Temperaturbereich von -20 - 30°C gekühlt werden. Insofern ist die Temperatur T₃ in Abschnitt C kleiner als die Temperatur T₂ in Abschnitt B. Ganz besonders bevorzugt ist T₃ auch kleiner als T₁. Hierdurch kann eine besonders gut handhabbare Konsistenz der gemischten Elektrodenmasse mit fibrilliertem Bindemittel 98 erreicht werden, die sich für die weitere Verarbeitung eignet.

Nachfolgend wird der Ausgang 100 im hinteren Abschnitt C des Mischers 86 näher erläutert.

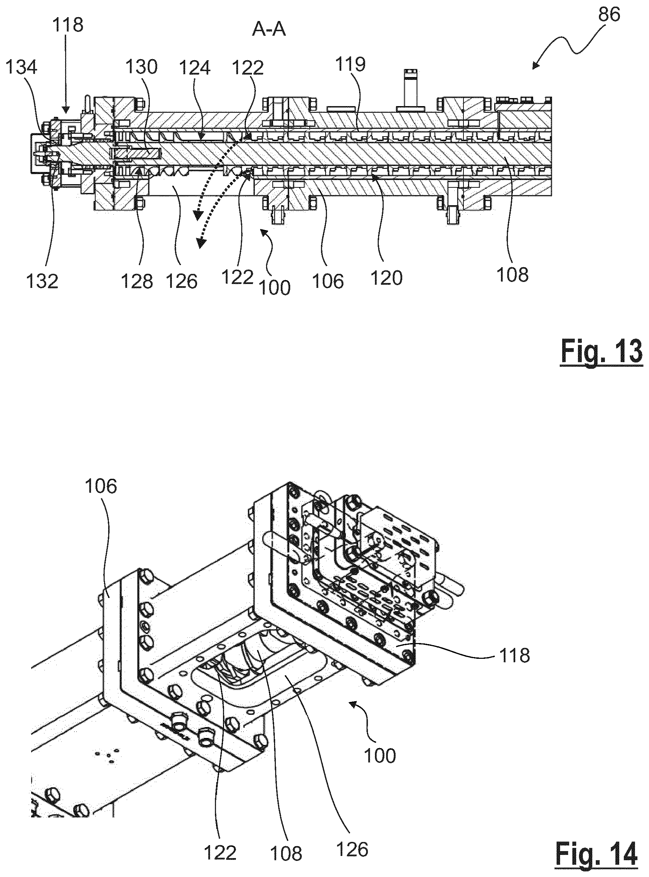

Figur 12 zeigt die Vorderansicht des hinteren Abschnitts C, der mit einem Gegenlager 118 zum Halten der Extruderwelle 108 versehen ist. Eine Querschnittsansicht sowie eine perspektivische Darstellung des hinteren Abschnitts C sind ferner in den Figuren 13 und 14 gezeigt, die nachfolgend erläutert werden.

Das Gehäuse 106 umfasst zwei miteinander verbundene Gehäusebohrungen 119, die sich in Förderrichtung durch den Mischer 86 erstrecken. In einer Gehäusebohrung 119 ist jeweils eine Extruderwelle 108 aufgenommen, die mit einer Vielzahl von Förder- und Mischelementen 120 bestückt ist, die die Elektrodenmasse fördern und verarbeiten.

Zudem ist am Gehäuse 106 eine den Ausgang 100 bildende Auswurföffnung 122 vorgesehen, durch die die Elektrodenmasse aus dem Mischer 86 abgeführt werden kann. In der gezeigten Ausführungsform erstreckt sich die Auswurföffnung 122 geschlossen, rahmenartig um die beiden Extruderwellen 108.

Im Bereich der Auswurföffnung 122, insbesondere stromabwärts der Auswurföffnung 122, ist die Extruderwelle 108 in einem Abschnitt 124 von Förder- und Mischelementen 120 befreit.

Ferner ist stromabwärts der Auswurföffnung 122 ein Auswurfschacht 126 gebildet, der mit der Auswurföffnung 122 strömungsmäßig verbunden ist und radial von dieser wegführt. Über den Auswurfschacht 126 kann die granulatartige Elektrodenmasse den Mischer 86 verlassen (angedeutet durch die gestrichelte Linie), indem diese nach unten wegrieselt. Die abgeführte Elektrodenmasse kann beispielsweise durch einen Sammelbehälter aufgefangen werden (hier nicht gezeigt).

Die wenigstens eine Extruderwelle 108 weist an ihrem freien Ende einen Extruderkopf 128 auf, der über einen Dorn 130 in einem Dornhalter 132 gelagert ist. Der Dornhalter 132 ist über Lager 134 im Gegenlager 118 befestigt.

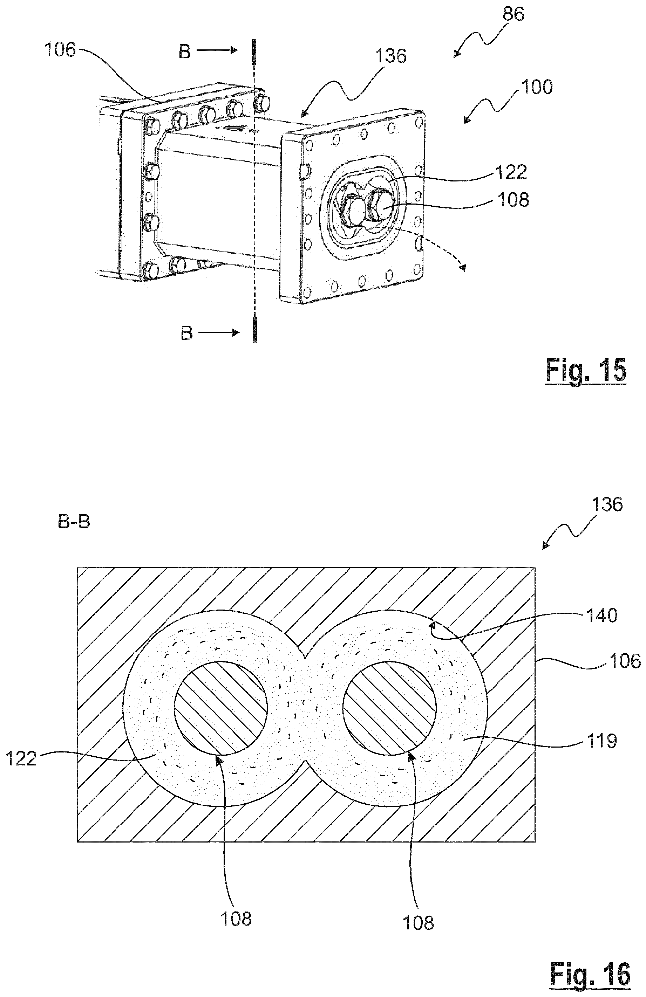

Alternativ kann das Gegenlager 118 entfallen, wie in Figur 15 dargestellt ist.

Gemäß der Ausführungsform in Figur 15 endet das Gehäuse 106 des Mischers 86 unmittelbar nach einem Förderabschnitt 136, über den die Elektrodenmasse durch den Mischer 86 in Förderrichtung bewegt wird. Die beiden Extruderwellen 108 schließen im Wesentlichen bündig mit der Auswurföffnung 122 ab, welche die beiden Extruderwellen 108 ringförmig umschließt. Insofern kann die geförderte Elektrodenmasse den Mischer 86 stirnseitig über die Auswurföffnung 122 ungehindert verlassen.

Die Auswurföffnung 122 ist in Fig. 16 näher erläutert. Konkret ist die Auswurföffnung 122 so gestaltet, dass die granulatförmige Elektrodenmasse ungehindert, ohne weitere Verdichtung, aus dem Ausgang 100 in flockiger, granulierter Form abgeworfen werden kann. Der Ausgang 100 ist somit offen, ohne die sonst übliche Düsenplatte am Extruderausgang, ausgebildet.

Gemäß der in Fig. 16 gezeigten Ausführungsform ist die Auswurföffnung 122 dazu im Wesentlichen von der Innenwand 140 der Gehäusebohrung 119 begrenzt, das heißt der Bohrung des Schneckenzylinders, in der die wenigstens eine Extruderwelle 108 angeordnet ist..

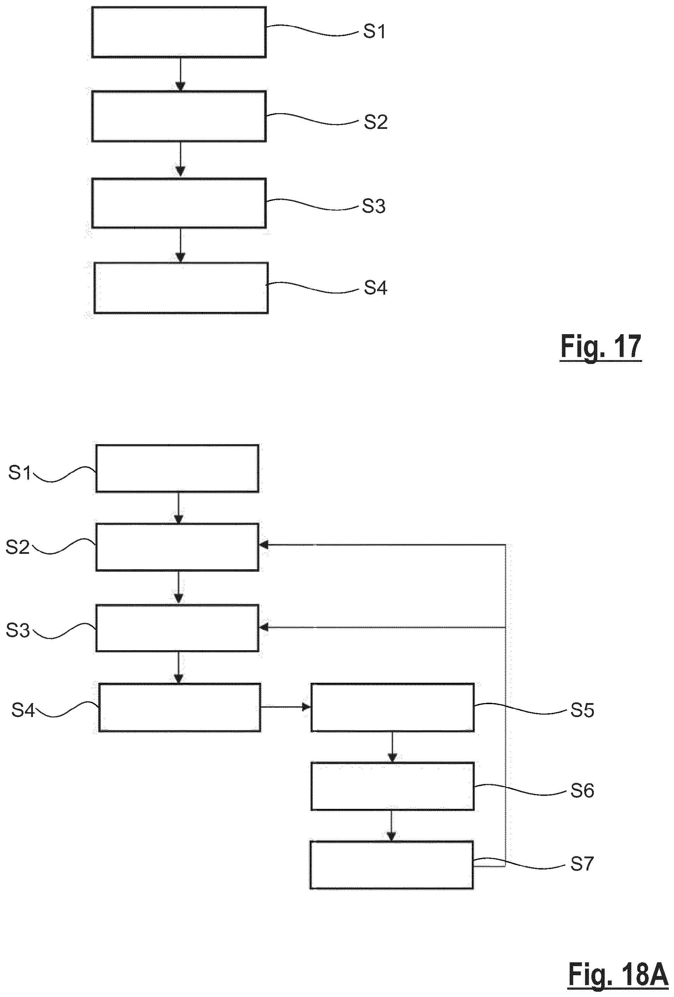

Als Nächstes wird anhand von Figur 17 ein Verfahren zum kontinuierlichen Dosieren eines fibrillierfähigen Bindemittels 20 für die Herstellung von Elektrodenmassen erläutert.

Das fibrillierfähige Bindemittel 20 kann ausgewählt sein aus der Gruppe bestehend aus Polytetrafluorethylen (PTFE), Ethylen-Tetrafluorethylen-Copolymer, Tetrafluorethylen-Hexafluorpropylen-Copolymer (FEP) und hochmolekularem Polyethylen (PE) sowie Kombinationen davon. Besonders bevorzugt ist das fibrillierfähige Bindemittel Polytetrafluorethylen.

In einem ersten Schritt S1 wird das pulverförmige fibrillierfähige Bindemittel 20 in einer ersten Dosiervorrichtung 12 bereitgestellt. Beispielsweise kann das fibrillierfähige Bindemittel 20 aus einem Gebinde 64 entnommen werden und in die erste Dosiervorrichtung 12 hineingegeben werden. Dies kann manuell oder teilautomatisiert, aber auch vollautomatisch mittels einer Förderstation 66 erfolgen.

In einem nächsten Schritt S2 wird das fibrillierfähige Bindemittel 20 aus der ersten Dosiervorrichtung 12 in die Nachfüllvorrichtung 16 volumetrisch dosiert. Bevorzugt erfolgt das volumetrische Dosieren mittels der Vibrationsrinne 24, die mit einer konstanten Vibrationsintensität und/oder einer konstanten Vibrationsfrequenz schwingt, wodurch ein gleichbleibender Materialaustrag aus der ersten Dosiervorrichtung 12 erfolgt.

Danach wird in einem Schritt S3 das fibrillierfähige Bindemittel 20 aus der Nachfüllvorrichtung 16 in eine zweite Dosiervorrichtung 14 nachgefüllt. Dieser Schritt S3 beinhaltet bevorzugt, dass die Nachfüllvorrichtung 16 die Partikelfraktion des Bindemittels aus Partikeln mit einer vorbestimmten Partikelgröße mittels einer Trenneinheit 26 bereitstellt, wobei die Nachfüllvorrichtung 16 nur die Partikelfraktion mit der vorbestimmten Partikelgröße in die zweite Dosiervorrichtung 14 nachfüllt.

Ferner kann der Schritt S3 noch einen Sammelschritt umfassen, der dem vorhergehenden Trennschritt nachgeschaltet ist und bei dem die Partikelfraktion mit der vorbestimmten Partikelgröße in dem Bindemittelspender 28 gesammelt wird, bevor die Partikelfraktion aus dem Bindemittelspender 28 in die zweite Dosiervorrichtung 14 nachgefüllt wird.

Besonders bevorzugt erfolgt der Schritt S3 nur, wenn eine vorbestimmte Menge der Partikelfraktion im Bindemittelspender 28 gesammelt ist.

Ganz besonders bevorzugt füllt der Bindemittelspender 28 eine diskrete Menge der Partikelfraktion mittels des Dosierelements 36, insbesondere der Dosierklappe, in die zweite Dosiervorrichtung 14 nach.

Nach Schritt S3 erfolgt in Schritt S4 ein gravimetrisches, kontinuierliches Dosieren des fibrillierfähigen Bindemittels 20 aus der zweiten Dosiervorrichtung 14 in den kontinuierlichen Mischer 86.

Wahlweise kann in Schritt S4 ein Überführungsschritt durchgeführt werden, bei dem das fibrillierfähige Bindemittel 20 mittels der Transfereinheit 88 in den kontinuierlichen Mischer 86 überführt wird.

Wenigstens einer der vorhergehenden Schritte S1 bis S4 findet unter Kühlung statt, insbesondere bei einer Umgebungstemperatur von 1 - 18°C, bevorzugt von 5 - 15°C, ganz besonders bevorzugt von 4 - 10°C. Gemäß einer besonders bevorzugten Ausführungsform finden alle der vorgenannten Schritte unter Kühlung statt.

Besonders bevorzugt weist die Luftfeuchtigkeit während der Schritte S1 - S4 einen Taupunkt von kleiner als 0°C auf, besonders bevorzugt kleiner als -10°C, ganz besonders bevorzugt kleiner als -20°C.

Wahlweise kann sich an Schritt S4 ein Nachfüllzyklus mit den Schritten S5 bis S7 anschließen, der nachfolgend anhand von Figur 18A erläutert wird.

Im Schritt S5 wird ein Wiegeschritt durch die Waage 46 durchgeführt, bei dem ein Gewichtswert des fibrillierfähigen Bindemittels 20 in der zweiten Dosiervorrichtung 14, insbesondere im zweiten Vorratsbehälter 42, kontinuierlich ermittelt wird.

Als Nächstes wird im Schritt S6 festgestellt, ob der ermittelte Gewichtswert niedriger als ein vorbestimmter Sollwert ist, der in der Nachfüllsteuerung 50 hinterlegt ist. Bei dem Sollwert kann es sich beispielsweise um einen vordefinierten Füllstandswert der zweiten Dosiervorrichtung 14 handeln, bei dessen Unterschreiten der Schritt S7 durchgeführt wird, der die Ausgabe eines Steuerungssignals von der Nachfüllsteuerung 50 an die Nachfüllvorrichtung 16 und/oder die erste Dosiervorrichtung 12 beinhaltet, wodurch die Schritte S2 und/oder S3 durchgeführt werden.

Während Schritt S3, nachdem die Trenneinheit 26 die Partikelfraktion des Bindemittels aus Partikeln mit einer vorbestimmten Partikelgröße bereitgestellt hat und eine vorbestimmte Menge der Partikelfraktion im Bindemittelspender 28 gesammelt wurde, wird Schritt S5 ausgesetzt und Schritt S4 für eine kurze Zeitspanne im volumetrischen Modus weitergeführt. In dieser Zeitspanne wird das Dosierelement 36 des Bindemittelspenders 28 geöffnet und die auf dem Dosierelement gesammelte diskrete Menge der Partikelfraktion auf einen Schlag in die zweite Dosiervorrichtung 14 entleert. Dadurch wird eine Störung des Wägesignals der Waage 46 verhindert. Anschließend wird die Waage 46 neu kalibriert, der Wiegeschritt S5 erneut aufgenommen und die zweite Dosiervorrichtung 14 in Schritt S4 wieder im gravimetrischen Modus betrieben.

Diese Schritte führen schließlich dazu, dass der Schritt S4 kontinuierlich mit hoher Dosiergenauigkeit durchgeführt werden kann.

Alternativ und/oder zusätzlich kann der Nachfüllzyklus in regelmäßigen Zeitintervallen durchgeführt werden.

Gemäß einer weiteren Ausführungsform können die Schritte S2 bis S4 jeweils über eine vorgegebene Dosiertaktung ausgeführt werden. Diese kann im Vorhinein festgelegt werden. Folglich entfällt die Notwendigkeit, dass der Nachfüllzyklus aktiv von der Nachfüllsteuerung 50 angesteuert wird wie in Figur 18A gezeigt. Vielmehr können die erste und die zweite Dosiervorrichtung 12, 14 und die Nachfüllvorrichtung 16 unabhängig voneinander arbeiten, ohne, dass ein Nachregeln durch die Nachfüllsteuerung 50 erfolgen muss.

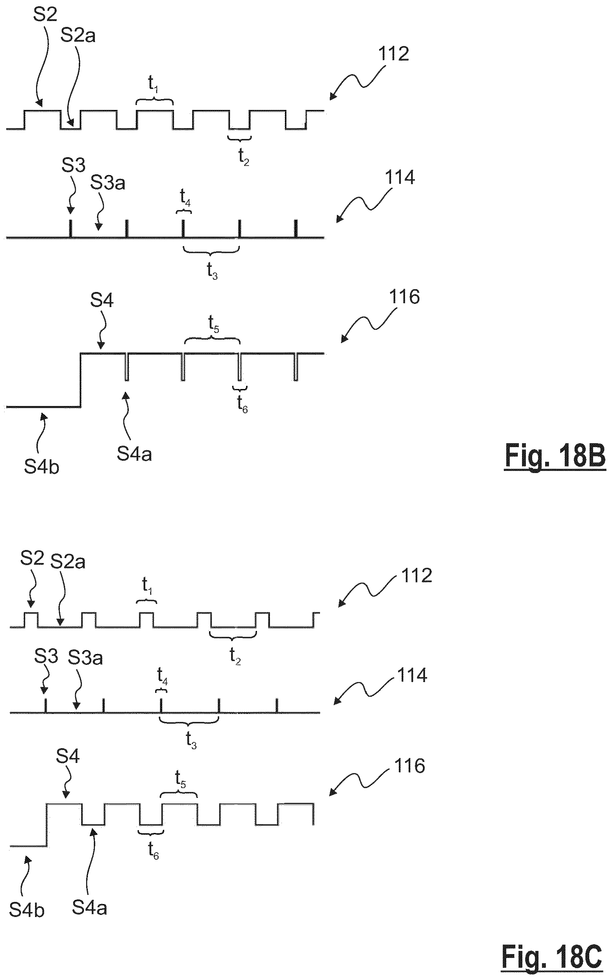

Figur 18B zeigt eine Dosiertaktung 112 für die erste Dosiervorrichtung 12, eine Dosiertaktung 114 für die Nachfüllvorrichtung 16 und eine Dosiertaktung 116 für die zweite Nachfüllvorrichtung 14.

Die Dosiertaktung 112 für die erste Dosiervorrichtung 12 umfasst abwechselnd den Schritt S2, also das Dosieren von Bindemittel in die Nachfüllvorrichtung 16, und den Schritt S2a, bei dem die erste Dosiervorrichtung 12 ausgeschaltet oder in einen Standby-Modus geschaltet wird. Schritt S2 wird in einer vordefinierten Zeitspanne t₁ und Schritt S2a in einer vordefinierten Zeitspanne t₂ durchgeführt. Im gezeigten beispielhaften Fall sind t₁ und t₂ etwa gleich lang. Es kann aber auch t₂ >> t₁ gelten, wobei Schritt S2a über mehrere Minuten und Schritt S2 über weniger als eine Minute durchgeführt werden kann.

Die Dosiertaktung 114 für die Nachfüllvorrichtung 16 umfasst abwechselnd den Schritt S3, also das Nachfüllen von Bindemittel in die zweite Dosiervorrichtung 14, und Schritt S3a, bei dem die Nachfüllvorrichtung 16 ausgeschaltet oder in einen Standby-Modus geschaltet wird. Schritt S3 wird in einer vordefinierten Zeitspanne t₄ und Schritt S3a in einer vordefinierten Zeitspanne t₃ durchgeführt.

Die Zeitspanne t₄ ist kürzer als die Zeitspanne t₃. Vorzugsweise dauert die Zeitspanne t₄ nicht mehr als 20% der Zeitspanne t₃., besonders bevorzugt nicht mehr als 10%, ganz besonders bevorzugt nicht mehr als 5%. Insbesondere kann S3 innerhalb weniger Sekunden durchgeführt werden.

Ferner werden die Schritte S3 zwischen den Schritten S2 durchgeführt und während der Schritte S2a. Bevorzugt wird der Schritt S3 in etwa bei der Zeitspanne t₂/2 durchgeführt. Insofern wird Schritt S3a während Schritt S2 durchgeführt.

Die Dosiertaktung 116 für die zweite Dosiervorrichtung 14 umfasst abwechselnd den Schritt S4, also das gravimetrische Dosieren von Bindemittel in den Mischer 86, und einen Schritt S4a, bei dem die Nachfüllvorrichtung 16 von dem gravimetrischen Dosiermodus in den volumetrischen Dosiermodus geschaltet wird. Schritt S4 wird in einer vordefinierten Zeitspanne t₅ und Schritt S4a in einer vordefinierten Zeitspanne t₆ durchgeführt. Bei der erstmaligen Inbetriebnahme der zweiten Dosiervorrichtung 14 wird einmalig der Schritt S4b durchgeführt, bei dem die zweite Dosiervorrichtung 14 vollständig abgeschaltet ist.

Die Schritte S4 und S4a sind im Wesentlichen komplementär zu den Schritten S3 und S3a. Das bedeutet, dass der Schritt S4 parallel zu dem Schritt S3a ausgeführt wird. Ferner wird Schritt S4a nur dann ausgeführt, wenn parallel der Schritt S3 erfolgt. Die Zeitspanne t₄ entspricht im Wesentlichen der Zeitspanne t₃ und die Zeitspanne t₆ der Zeitspanne t₄. Somit kann Schritt S4a während weniger Sekunden und Schritt S4 über mehrere Minuten durchgeführt werden.

Figur 18C zeigt eine alternative Ausführung für die Dosiertaktungen 112, 114 und 116.

Im Unterschied zur Dosiertaktung 112 in Figur 18B, ist die Zeitspanne t₂ nun länger als die Zeitspanne t₁. Bevorzugt ist das Zeitintervall t₂ mindestens doppelt so lang wie die Zeitspanne t₁.

Die Dosiertaktung 114 führt den Schritt S3 während des Schritts S2a der Dosiertaktung 112 durch, aber nicht mehr bei t₂/2, sondern in etwa bei t₂/4.

Die Dosiertaktung 116 ist nun nicht mehr komplementär zur Dosiertaktung 114. Stattdessen weist der Schritt S4a eine Zeitspanne t₆ auf, die länger ist als die Zeitspanne t₄ des Schritts S3. Ferner sind die Schritte S4a und S3 so aufeinander abgestimmt, dass Schritt S3 unmittelbar vor Schritt S4 durchgeführt, also am Ende des Zeitintervalls t₆.

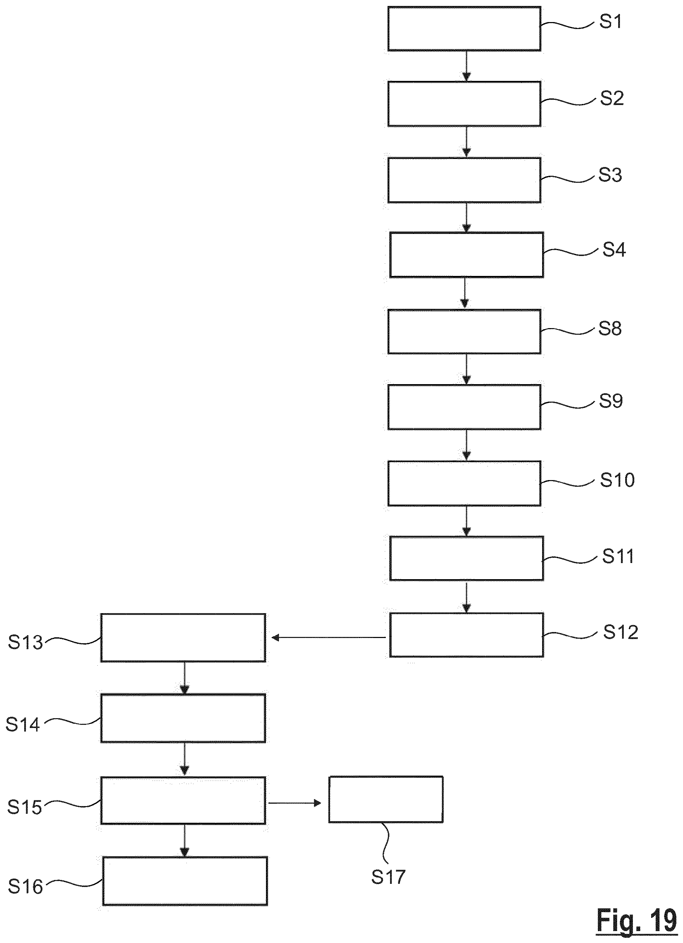

Figur 19 zeigt schematisch die Verfahrensschritte zum Herstellen der granulatartigen Elektrodenmassen mit fibrilliertem Bindemittel 98. Die ersten Schritte S1 bis S4 entsprechen den vorhergehenden Schritten gemäß Figur 17, sodass auf die vorstehende Beschreibung verwiesen wird. Der Übersicht halber ist der Nachfüllzyklus sowie die Dosiertaktung nicht gezeigt. Es versteht sich aber, dass der Nachfüllzyklus oder die Dosiertaktung auch hier wie oben beschrieben durchgeführt werden kann.

An Schritt S4 schließt sich Schritt S8 an, in dem das fibrillierfähige Bindemittel 20 mit weiteren Komponenten 94 der Elektrodenmasse in dem kontinuierlichen Mischer 86 gemischt wird.

Die weiteren Komponenten 94 umfassen ein Elektrodenaktivmaterial sowie weitere Additive wie Leitfähigkeitsverbesserer und Kombinationen davon. Insoweit wird Bezug auf die obige Beschreibung genommen

Danach werden die mit dem Bindemittel 20 gemischten Komponenten 94 mittels der Extruderwelle 108 in einen Schritt S9 homogenisiert. Es wird eine homogenisierte Elektrodenmasse mit fibrillierfähigem Bindemittel erhalten. Bevorzugt finden die Schritte S8 und S9 im vorderen Abschnitt A des Mischers bzw. Extruders 86 statt. Besonders bevorzugt werden die Schritte S8 und S9 bei einer Temperatur T₁ von 10 - 250°C durchgeführt.

Anschließend wird der Schritt S10 durchgeführt, bei dem die homogenisierte Elektrodenmasse mit fibrillierfähigem Bindemittel geknetet wird. Dazu kann die Extruderwelle 108 in Abschnitt B neben Wellenelementen auch polygonale Elemente aufweisen. Durch das Kneten und die dabei auftretenden Partikel-Partikel-Interaktionen bildet das fibrillierfähige Bindemittel ein durchgehendes Fibrillennetzwerk in der Elektrodenmasse aus, und es wird eine Elektrodenmasse mit fibrilliertem Bindemittel 98 erhalten. Bevorzugt findet Schritt S10 in mittleren Abschnitt B des Mischers 86 statt. Besonders bevorzugt findet der Schritt S10 bei einer Temperatur T₂ zwischen 50 - 250°C statt. Ganz besonders bevorzugt ist die Temperatur T₂ im Schritt S10 größer als die Temperatur T₁ in den Schritten S8 und/oder S9.

Als nächstes wird in Schritt S11 die Elektrodenmasse mit fibrilliertem Bindemittel 98 für die weitere Verarbeitung aufbereitet. Der Schritt S11 findet bevorzugt im hinteren Abschnitt C des Mischers 86 statt. Hierbei wird die Elektrodenmasse mit fibrilliertem Bindemittel 98 mittels der Extruderwelle granuliert bzw. zu einer pulvrigen, flockigen oder granulatartigen Elektrodenmasse verarbeitet.

Ganz besonders bevorzugt wird der Schritt S11 unter gekühlten Bedingungen bei der Temperatur T₃ in einem Bereich von -20 - 30°C durchgeführt. Ganz besonders bevorzugt wird der Schritt S11 bei einer kleineren Temperatur T₃ im Vergleich zur Temperatur T₂ in Schritt S10 durchgeführt. Ganz besonders bevorzugt findet der Schritt S11 auch bei einer Temperatur T₃ statt, die niedriger ist als die Temperatur T₁ bei den Schritten S8 bis S10.

Abschließend wird in Schritt S12 die granulatartige Elektrodenmasse mit fibrilliertem Bindemittel 98 über den Ausgang 100 aus dem Mischer 86 abgeführt.

Wahlweise kann sich nach Schritt S12 noch eine Qualitätskontrolle durch die Qualitätskontrolleinheit 101 umfassend die Schritte S13 bis S17 anschließen.

Im Schritt S13 wird wenigstens ein qualitätsrelevanter Parameter der erhaltenen Elektrodenmasse 98 erfasst, beispielsweise durch ein optisches System, insbesondere durch IR-Spektroskopie.

Alternativ können noch weitere bildgebende Verfahren verwendet werden, beispielsweise Lichtmikroskopie.

In einem nächsten Schritt S14, wird der erfasste qualitätsrelevante Parameter mit einem für den qualitätsrelevanten Parameter vorbestimmten Wertbereich verglichen, in den als ordnungsgemäß definierte qualitätsrelevante Parameter fallen. Dieser vordefinierte Wertebereich kann im Vorhinein anhand von experimentellen Daten empirisch festgelegt werden.

Danach wird im Schritt S15 der Vergleich ausgewertet. Die Auswertung kann beispielsweise mittels einer Datenbank erfolgen, in der die erforderlichen Parameter hinterlegt sind. Die Parameter können im Vorhinein durch empirische Experimente ermittelt werden. Falls der Vergleich ergibt, dass der qualitätsrelevante Parameter außerhalb des Wertebereichs liegt: Ausgeben eines Warnsignals; Erstellen und Senden eines Reports, in dem der außerhalb des Wertebereichs liegende Parameter hervorgehoben ist; Anpassen eines produktionsrelevanten Parameters, sodass der qualitätsrelevante Parameter in den vordefinierten Wertebereich fällt und/oder Verändern eines Produktflusses, sodass die Elektrodenmasse entsorgt wird. Falls der Vergleich ergibt, dass der Parameter innerhalb des Wertebereichs liegt: Freigeben der Elektrodenmasse 98 für weitere Verarbeitungsschritte.

In Abhängigkeit des Vergleichs kann also entweder im ersten Fall ein Schritt S16 erfolgen, bei dem die Elektrodenmasse 98 in einem Entsorgungsbehälter 110 geleitet und aus dem Prozess entnommen wird oder es kann im zweiten Fall ein Schritt S17 folgen, bei dem die Elektrodenmasse mit fibrilliertem Bindemittel 98 für die weiteren Verarbeitungsschritte freigegeben wird.

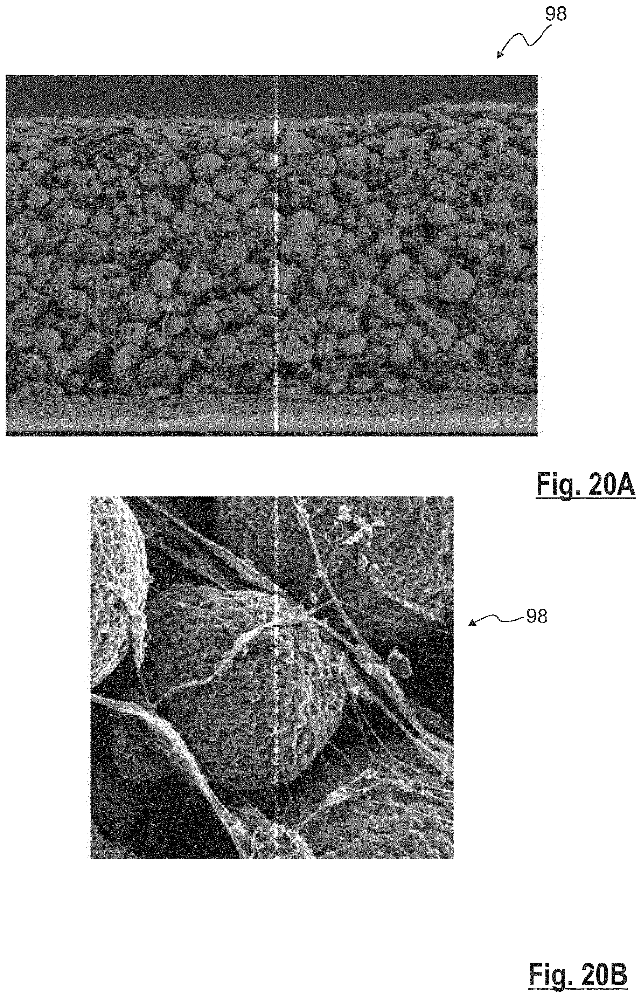

In den Figuren 20a und 20b sind elektronenmikroskopische Aufnahmen der granulatartigen Elektrodenmasse mit fibrilliertem Bindemittel 98 gezeigt. Zu erkennen sind die Fibrillen bzw. das Fibrillennetzwerk des Bindemittels 20, das sich spinnennetzartig um die einzelnen, Bestandteile der Elektrode herumerstreckt und diese miteinander verbindet.

## Patentansprüche

1. Bindemitteldosiersystem (10) zum kontinuierlichen Dosieren eines fibrillierfähigen Bindemittels (20) für die Herstellung von Elektrodenmassen, mit einer ersten Dosiervorrichtung (12), einer zweiten Dosiervorrichtung (14) und einer Nachfüllvorrichtung (16), die die erste und zweite Dosiervorrichtung (12, 14) in Förderrichtung (18) verbindet,
wobei die erste Dosiervorrichtung (12) dazu eingerichtet ist, das fibrillierfähige Bindemittel (20) in die Nachfüllvorrichtung (16) volumetrisch zu dosieren, wobei die erste Dosiervorrichtung (12) eine volumetrische Vibrationsrinne (24) oder einen Bandförderer umfasst, um das fibrillierfähige Bindemittel (20) in die Nachfüllvorrichtung (16) volumetrisch zu dosieren,
wobei die Nachfüllvorrichtung (16) eine Trenneinheit (26) umfasst, die eine Partikelfraktion des fibrillierfähigen Bindemittels (20) aus Partikeln mit vorbestimmter Partikelgröße bereitstellt, und wobei die Nachfüllvorrichtung (16) dazu eingerichtet ist, die Partikelfraktion des fibrillierfähigen Bindemittels (20) aus Partikeln mit vorbestimmter Partikelgröße in die zweite Dosiervorrichtung (14) nachzufüllen, und
wobei die zweite Dosiervorrichtung (14) dazu eingerichtet ist, das fibrillierfähige Bindemittel (20) kontinuierlich, gravimetrisch zu dosieren, und
wobei das Bindemitteldosiersystem (10) eine Kühlvorrichtung (51) zur Kühlung des fibrillierfähigen Bindemittels (20) umfasst.

2. Bindemitteldosiersystem (10) nach Anspruch 1, **dadurch gekennzeichnet, dass** stromabwärts von der zweiten Dosiervorrichtung (14) eine Transfereinheit (88) angeordnet, die mit der zweiten Dosiervorrichtung (14) gekoppelt ist und das fibrillierfähige Bindemittels (20) aus der zweiten Dosiervorrichtung (14) in einen kontinuierlichen Mischer (86) überführt, wobei die Transfereinheit (88) wenigstens einen Sammeltrichter (90) sowie eine an den Sammeltrichter (90) gekoppelte Vibrationseinheit (92) umfasst.

3. Bindemitteldosiersystem (10) nach Anspruch 2, **dadurch gekennzeichnet, dass** die Transfereinheit (88) wenigstens ein mit der zweiten Dosiervorrichtung (14) gekoppeltes Rohrelement (82) aufweist, das zentral mittig, insbesondere bis etwa zur Hälfte, in den Sammeltrichter (90) hineinragt.

4. Bindemitteldosiersystem (10) nach einem der Ansprüche 1 bis 3, **dadurch gekennzeichnet, dass** die Kühlvorrichtung (51) einen Kühlturm (52) umfasst, der das Bindemitteldosiersystem (10) wenigstens teilweise, bevorzugt vollständig, in einer Kühlkammer (56) einschließt und die Kühlkammer (56) auf eine vorbestimmte Temperatur kühlt, und/oder
wobei die Kühlvorrichtung (51) wenigstens ein Kühlmodul (74) und/oder eine Kühleinheit (75) umfasst, die einen Abschnitt des Bindemitteldosiersystems (10) auf eine vorbestimmte Temperatur kühlen.

5. Verfahren zum kontinuierlichen Dosieren eines fibrillierfähigen Bindemittels für die Herstellung von Elektrodenmassen unter Verwendung des Bindemitteldosiersystems gemäß einem der Ansprüche 1 bis 4, wobei das Verfahren die folgenden Schritte umfasst:
a) Bereitstellen eines fibrillierfähigen Bindemittels (20) in einer ersten Dosiervorrichtung (12);
b) volumetrisches Dosieren des fibrillierfähigen Bindemittels (20) aus der ersten Dosiervorrichtung (12) in eine Nachfüllvorrichtung (16) mittels der volumetrischen Vibrationsrinne (24) oder dem Bandförderer;
c) Nachfüllen des fibrillierfähigen Bindemittels (20) aus der Nachfüllvorrichtung (16) in eine zweite Dosiervorrichtung (14), wobei die Nachfüllvorrichtung (16) eine Trenneinheit (26) umfasst, die eine Partikelfraktion des fibrillierfähigen Bindemittels (20) aus Partikeln mit vorbestimmter Partikelgröße bereitstellt, wobei die Nachfüllvorrichtung (16) nur die Partikelfraktion mit der vorbestimmten Partikelgröße in die zweite Dosiervorrichtung (14) nachfüllt;
und
d) gravimetrisches, kontinuierliches Dosieren des fibrillierfähigen Bindemittels (20) aus der zweiten Dosiervorrichtung (14) in einen kontinuierlichen Mischer (86),
wobei die Schritte b) und/oder c) gesteuert und/oder in definierten Zeitintervallen durchgeführt werden, und wobei einer oder mehrere der Schritte a) - d) unter Kühlung durchgeführt werden.

6. Verfahren nach Anspruch 5, **dadurch gekennzeichnet, dass** die Nachfüllvorrichtung (16) einen Bindemittelspender (28) umfasst, in dem die Partikelfraktion mit der vorbestimmten Partikelgröße gesammelt wird, bevor die Partikelfraktion aus dem Bindemittelspender (28) in die zweite Dosiervorrichtung (14) nachgefüllt wird.

7. Verfahren nach Anspruch 6, **dadurch gekennzeichnet, dass** der Schritt c) erfolgt, wenn eine vorbestimmte Menge der Partikelfraktion im Bindemittelspender (28) gesammelt ist.

8. Verfahren nach Anspruch 6 oder 7, **dadurch gekennzeichnet, dass** der Bindemittelspender (28) eine diskrete Menge der Partikelfraktion mittels eines Dosierelements (36), insbesondere einer Dosierklappe, einer Dosierschaufel, einem Dosierschieber, einem Dosierrad, in die zweite Dosiervorrichtung (14) nachfüllt.

9. Verfahren nach einem der Ansprüche 5 bis 8, **dadurch gekennzeichnet, dass** während des Schritts d) ein Wiegeschritt durchgeführt wird, bei dem ein Gewichtswert des fibrillierfähigen Bindemittels (20) in der zweiten Dosiervorrichtung (14) kontinuierlich ermittelt wird,
wobei wenn ein Gewichtswert festgestellt wird, der niedriger als ein vorbestimmter Sollwert ist, ein Steuerungssignal von der zweiten Dosiervorrichtung (14) an die Nachfüllvorrichtung (16) und/oder die erste Dosiervorrichtung (12) ausgegeben wird, wodurch der Schritt c) und/oder Schritt b) durchgeführt wird, oder,
dass die Schritte b), c) und d) durch eine Dosiertaktung (112, 114, 116) vorgegeben sind.

10. Verfahren nach einem der Ansprüche 5 bis 9, **dadurch gekennzeichnet, dass** einer oder mehrere der Schritte a) - d) unter Kühlung bei einer Umgebungstemperatur von 1 - 18 °C durchgeführt werden, bevorzugt von 5 - 15 °C, ganz bevorzugt von 4 - 10 °C.

11. Verfahren nach einem der Ansprüche 5 bis 10, **dadurch gekennzeichnet, dass** einer oder mehrere der Schritte a) - d) bei einer konstanten Luftfeuchtigkeit durchgeführt werden, insbesondere bei einem Taupunkt kleiner als 0°C, bevorzugt kleiner als -10°C, ganz besonders bevorzugt von -20°C.

12. Produktionssystem (84) zum Herstellen von Elektrodenmassen, mit einem Bindemitteldosiersystem (10) nach einem der Ansprüche 1 bis 4 und einem kontinuierlichen Mischer (86), der mit der zweiten Dosiervorrichtung (14) in Förderrichtung (18) gekoppelt ist.

13. Produktionssystem (84) nach Anspruch 12, **dadurch gekennzeichnet, dass** der kontinuierliche Mischer (86) ein Extruder ist, der ein Gehäuse (106) mit einem vorderen Abschnitt A aufweist, an dem sich stromabwärts in Förderrichtung (18) nacheinander ein mittlerer Abschnitt B, und ein hinterer Abschnitt C anschließen,
wobei im vorderen und/oder mittleren Abschnitt wenigstens einen Einlass (96) für ein fibrillierfähiges Bindemittel und/oder weitere Elektrodenkomponenten und im hinteren Abschnitt ein Ausgang (100) mit einer Auswurföffnung (122) vorgesehen ist,
wobei im Gehäuse (106) wenigstens eine Extruderwelle (108) aufgenommen ist, die sich in Förderrichtung (18) durch das Gehäuse (106) erstreckt, wobei die mindestens eine Extruderwelle (108) mehrere Mischelemente und/oder Förderelemente (120) aufweist, die zumindest abschnittsweise vollständig aus einem Kunststoff gefertigt sind oder einen Kunststoffmantel umfassen, der einen metallischen Kern umhüllt, insbesondere wobei der Kunststoff PEEK ist, und/oder
wobei die Auswurföffnung (122) so gestaltet ist, dass die Elektrodenmasse ungehindert aus dem Ausgang (100) in granulatartiger Form abgeworfen werden kann, insbesondere wobei die Auswurföffnung (122) im Wesentlichen von einer Innenwand (140) einer Gehäusebohrung (119) begrenzt ist, in der die wenigstens eine Extruderwelle (108) angeordnet ist.

14. Produktionssystem (84) nach Anspruch 13, **dadurch gekennzeichnet, dass** stromabwärts der Auswurföffnung (122) ein Auswurfschacht (126) angeordnet ist.

15. Produktionssystem (84) nach Anspruch 13 oder 14, **dadurch gekennzeichnet, dass** stromabwärts der Auswurföffnung (122) ein Gegenlager (118) vorgesehen ist, in dem die wenigstens eine Extruderwelle (108) gelagert ist.

16. Verfahren zum kontinuierlichen Herstellen von Elektrodenmassen, wobei das Verfahren die Schritte a) - d) des Verfahrens gemäß einem der Ansprüche 5 bis 11 und zusätzlich die folgenden Schritte umfasst:
e) Mischen des fibrillierfähigen Bindemittels (20) mit weiteren Komponenten (94) der Elektrodenmasse in einem kontinuierlichen Mischer (86); und
f) Verarbeiten des fibrillierfähigen Bindemittels (20) mit den weiteren Komponenten (94) der Elektrodenmasse unter Fibrillieren des fibrillierfähigen Bindemittels unter Erhalt einer granulatartigen Elektrodenmasse mit fibrilliertem Bindemittel (98).

17. Verfahren zum kontinuierlichen Herstellen von Elektrodenmassen nach Anspruch 16, **dadurch gekennzeichnet, dass** nach Schritt f) eine Qualitätskontrolle mit den folgenden Verfahrensschritten g) - i) durchgeführt wird:
g) Erfassen wenigstens eines qualitätsrelevanten Parameters in der Elektrodenmasse mit fibrilliertem Bindemittel (98);
h) Vergleichen des qualitätsrelevanten Parameters mit einem für den qualitätsrelevanten Parameter vorbestimmten Wertebereich, in den als ordnungsgemäß definierte qualitätsrelevante Parameter fallen;
i) Falls der Vergleich ergibt, dass der Parameter außerhalb des Wertebereichs liegt: Ausgeben eines Warnsignals, Erstellen und Senden eines Reports, in dem der außerhalb des Wertebereichs liegende Parameter hervorgehoben ist, Anpassen eines produktionsrelevanten Parameters, sodass der qualitätsrelevante Parameter in den vordefinierten Wertebereich fällt und/oder Verändern eines Produktflusses, sodass die Elektrodenmasse entsorgt wird, wobei falls der Vergleich ergibt, dass der Parameter innerhalb des Wertebereichs liegt: Freigeben der Elektrodenmasse mit fibrilliertem Bindemittel (98) für weitere Verarbeitungsschritte.

## Claims

1. A binder dosing system (10) for continuously dosing a fibrillatable binder (20) for the production of electrode compositions, comprising a first dosing device (12), a second dosing device (14), and a refilling device (16) which connects the first and second dosing devices (12, 14) in a conveying direction (18),
wherein the first dosing device (12) is configured to volumetrically dose the fibrillatable binder (20) into the refilling device (16), the first dosing device (12) comprising a volumetric vibrating trough (24) or a belt conveyor to volumetrically dose the fibrillatable binder (20) into the refilling device (16),
wherein the refilling device (16) comprises a separating unit (26) which provides a particle fraction of the fibrillatable binder (20) of particles having a predetermined particle size, and wherein the refilling device (16) is configured to refill the particle fraction of the fibrillatable binder (20) of particles having a predetermined particle size into the second dosing device (14), and
wherein the second dosing device (14) is configured to continuously and gravimetrically dose the fibrillatable binder (20), and
wherein the binder dosing system (10) comprises a cooling device (51) for cooling the fibrillatable binder (20).

2. The binder dosing system (10) according to claim 1, **characterized in that** a transfer unit (88) is arranged downstream of the second dosing device (14) and is coupled to the second dosing device (14) and transfers the fibrillatable binder (20) from the second dosing device (14) into a continuous mixer (86), the transfer unit (88) comprising at least one collecting funnel (90) and a vibration unit (92) coupled to the collecting funnel (90).

3. The binder dosing system (10) according to claim 2, **characterized in that** the transfer unit (88) has at least one pipe element (82) that is coupled to the second dosing device (14) and protrudes into the collection funnel (90) centrally in the middle, in particular up to about halfway.

4. The binder dosing system (10) according to any one of claims 1 to 3, **characterized in that** the cooling device (51) comprises a cooling tower (52) which encloses the binder dosing system (10) at least partially, preferably completely, in a cooling chamber (56) and cools the cooling chamber (56) to a predetermined temperature, and/or
wherein the cooling device (51) comprises at least one cooling module (74) and/or cooling unit (75) which cool a section of the binder dosing system (10) to a predetermined temperature.

5. A method of continuously dosing a fibrillatable binder for the production of electrode compositions using the binder dosing system according to any one of claims 1 to 4, the method comprising the following steps:
a) providing a fibrillatable binder (20) in a first dosing device (12);
b) volumetrically dosing the fibrillatable binder (20) from the first dosing device (12) into a refilling device (16) by means of the volumetric vibrating trough (24) or the belt conveyor;
c) refilling the fibrillatable binder (20) from the refilling device (16) into a second dosing device (14), wherein the refilling device (16) comprises a separating unit (26) which provides a particle fraction of the fibrillatable binder (20) of particles having a predetermined particle size, the refilling device (16) refilling only the particle fraction having the predetermined particle size into the second dosing device (14);
and
d) gravimetrically and continuously dosing the fibrillatable binder (20) from the second dosing device (14) into a continuous mixer (86),
wherein steps b) and/or c) are carried out in a controlled manner and/or at defined time intervals, and wherein one or more of steps a) to d) are carried out under cooling.

6. The method according to claim 5, **characterized in that** the refilling device (16) comprises a binder dispenser (28) in which the particle fraction having the predetermined particle size is collected before the particle fraction is refilled from the binder dispenser (28) into the second dosing device (14).

7. The method according to claim 6, **characterized in that** step c) is performed when a predetermined amount of the particle fraction has been collected in the binder dispenser (28).

8. The method according to claim 6 or 7, **characterized in that** the binder dispenser (28) refills a discrete amount of the particle fraction into the second dosing device (14) by means of a dosing element (36), in particular a dosing flap, a dosing scoop, a dosing slide, a dosing wheel.

9. The method according to any one of claims 5 to 8, **characterized in that** during step d) a weighing step is carried out in which a weight value of the fibrillatable binder (20) in the second dosing device (14) is continuously determined,
wherein, if a weight value is determined that is lower than a predetermined setpoint value, a control signal is output by the second dosing device (14) to the refilling device (16) and/or the first dosing device (12), whereby step c) and/or step b) is/are carried out, or,
**in that** steps b), c), and d) are specified by a dosing cycle timing (112, 114, 116).

10. The method according to any one of claims 5 to 9, **characterized in that** one or more of steps a) to d) are carried out under cooling at an ambient temperature of 1 to 18 °C, preferably of 5 to 15 °C, especially preferably of 4 to 10 °C.

11. The method according to any one of claims 5 to 10, **characterized in that** one or more of steps a) to d) are carried out at a constant air humidity, in particular at a dew point of less than 0 °C, preferably less than -10 °C, very particularly preferably of -20 °C.

12. A production system (84) for producing electrode compositions, comprising a binder dosing system (10) according to any one of claims 1 to 4 and a continuous mixer (86) coupled to the second dosing device (14) in the conveying direction (18).

13. The production system (84) according to claim 12, **characterized in that** the continuous mixer (86) is an extruder that includes a housing (106) having a front section A, which is adjoined downstream in the conveying direction (18) by a middle section B and a rear section C in succession,
wherein at least one inlet (96) for a fibrillatable binder and/or further electrode components is provided in the front and/or middle section, and an outlet (100) having an ejection opening (122) is provided in the rear section,
wherein at least one extruder shaft (108) is received in the housing (106), which extends through the housing (106) in the conveying direction (18), wherein the at least one extruder shaft (108) includes a plurality of mixing elements and/or conveying elements (120) which are made entirely of a plastic material at least in sections or comprise a plastic jacket which encases a metallic core, in particular wherein the plastic material is PEEK, and/or
wherein the ejection opening (122) is designed such that the electrode composition can be discharged without hindrance from the outlet (100) in granular form, in particular wherein the ejection opening (122) is essentially defined by an inner wall (140) of a housing bore (119) in which the at least one extruder shaft (108) is arranged.

14. The production system (84) according to claim 13, **characterized in that** an ejection duct (126) is arranged downstream of the ejection opening (122).

15. The production system (84) according to claim 13 or 14, **characterized in that** downstream of the ejection opening (122), a counter bearing (118) is provided in which the at least one extruder shaft (108) is mounted.

16. A method of continuously producing electrode compositions, the method comprising steps a) to d) of the method according to any one of claims 5 to 11 and additionally the following steps:
e) mixing the fibrillatable binder (20) with further components (94) of the electrode composition in a continuous mixer (86); and
f) processing the fibrillatable binder (20) with the further components (94) of the electrode composition while fibrillating the fibrillatable binder to obtain a granular electrode composition with a fibrillated binder (98).

17. The method of continuously producing electrode compositions according to claim 16, **characterized in that**, after step f), a quality control is carried out that comprises the following method steps g) - i):
g) acquiring at least one quality-relevant parameter in the electrode composition with the fibrillated binder (98);
h) comparing the quality-relevant parameter with a value range that is predetermined for the quality-relevant parameter and within which quality-relevant parameters fall that are defined as proper;
i) if the comparison reveals that the parameter is outside the value range: outputting a warning signal, preparing and sending a report that highlights the parameter that is outside the value range, adjusting a production-relevant parameter so that the quality-relevant parameter falls within the predefined value range, and/or changing a product flow so that the electrode composition is disposed of, wherein if the comparison reveals that the parameter is within the value range: releasing the electrode composition with the fibrillated binder (98) for further processing steps.

## Revendications

1. Système de dosage de liant (10) pour le dosage continu d'un liant fibrillable (20) pour la fabrication de masses d'électrodes, comprenant un premier dispositif de dosage (12), un deuxième dispositif de dosage (14) et un dispositif de remplissage (16) reliant le premier et le deuxième dispositif de dosage (12, 14) dans le sens de convoyage (18),
le premier dispositif de dosage (12) étant réalisé de manière à doser volumétriquement le liant fibrillable (20) dans le dispositif de remplissage (16), le premier dispositif de dosage (12) comprenant une goulotte vibrante volumétrique (24) ou un convoyeur à bande pour doser volumétriquement le liant fibrillable (20) dans le dispositif de remplissage (16),
le dispositif de remplissage (16) comprenant une unité de séparation (26) qui fournit une fraction de particules du liant fibrillable (20) à partir de particules de taille de particule prédéterminée, et le dispositif de remplissage (16) étant réalisé de manière à remplir la fraction de particules du liant fibrillable (20) à partir de particules de taille de particule prédéterminée dans le deuxième dispositif de dosage (14), et
le deuxième dispositif de dosage (14) étant réalisé de manière à doser le liant fibrillable (20) de manière continue et gravimétrique, et
le système de dosage de liant (10) comprenant un dispositif de refroidissement (51) pour le refroidissement du liant fibrillable (20).

2. Système de dosage de liant (10) selon la revendication 1, **caractérisé en ce qu'**une unité de transfert (88) est agencée en aval du deuxième dispositif de dosage (14), laquelle est couplée au deuxième dispositif de dosage (14) et transfère le liant fibrillable (20) du deuxième dispositif de dosage (14) vers un mélangeur continu (86), l'unité de transfert (88) comprenant au moins une trémie collectrice (90) ainsi qu'une unité vibrante (92) couplée à la trémie collectrice (90).

3. Système de dosage de liant (10) selon la revendication 2, **caractérisé en ce que** l'unité de transfert (88) comprend au moins un élément tubulaire (82) qui est couplé au deuxième dispositif de dosage (14) et qui fait saillie de manière centrale au milieu, en particulier jusqu'à environ la moitié, dans la trémie collectrice (90).

4. Système de dosage de liant (10) selon l'une des revendications 1 à 3, **caractérisé en ce que** le dispositif de refroidissement (51) comprend une tour de refroidissement (52) qui enferme le système de dosage de liant (10) au moins partiellement, de préférence entièrement, dans une chambre de refroidissement (56) et refroidit la chambre de refroidissement (56) à une température prédéterminée, et/ou
le dispositif de refroidissement (51) comprenant au moins un module de refroidissement (74) et/ou une unité de refroidissement (75) qui refroidissent une partie du système de dosage de liant (10) à une température prédéterminée.

5. Procédé de dosage en continu d'un liant fibrillable pour la fabrication de masses d'électrodes au moyen du système de dosage de liant selon l'une des revendications 1 à 4, le procédé comprenant les étapes suivantes :
a) le fournissement d'un liant fibrillable (20) dans un premier dispositif de dosage (12),
b) le dosage volumétrique du liant fibrillable (20) à partir du premier dispositif de dosage (12) dans un dispositif de remplissage (16) au moyen de la goulotte vibrante volumétrique (24) ou du convoyeur à bande,
c) le remplissage du liant fibrillable (20) à partir du dispositif de remplissage (16) dans un deuxième dispositif de dosage (14), le dispositif de remplissage (16) comprenant une unité de séparation (26) qui fournit une fraction de particules du liant fibrillable (20) à partir de particules de taille de particule prédéterminée, le dispositif de remplissage (16) ne remplissant le deuxième dispositif de dosage (14) qu'avec la fraction de particules de taille de particule prédéterminée,
et
d) le dosage gravimétrique continu du liant fibrillable (20) à partir du deuxième dispositif de dosage (14) dans un mélangeur continu (86),
les étapes b) et/ou c) étant commandées et/ou effectuées à des intervalles de temps définis, et une ou plusieurs des étapes a) à d) étant effectuées sous refroidissement.

6. Procédé selon la revendication 5, **caractérisé en ce que** le dispositif de remplissage (16) comprend un distributeur de liant (28) dans lequel la fraction de particules présentant la taille de particules prédéterminée est collectée avant le remplissage de la fraction de particules à partir du distributeur de liant (28) dans le deuxième dispositif de dosage (14).

7. Procédé selon la revendication 6, **caractérisé en ce que** l'étape c) est réalisée lorsqu'une quantité prédéterminée de la fraction de particules est collectée dans le distributeur de liant (28).

8. Procédé selon la revendication 6 ou 7, **caractérisé en ce que** le distributeur de liant (28) recharge une quantité discrète de la fraction de particules dans le deuxième dispositif de dosage (14) au moyen d'un élément de dosage (36), en particulier un clapet de dosage, une pelle de dosage, une vanne de dosage, une roue de dosage.

9. Procédé selon l'une des revendications 5 à 8, **caractérisé en ce que** pendant l'étape d), une étape de pesage est effectuée, au cours de laquelle une valeur pondérale du liant fibrillable (20) dans le deuxième dispositif de dosage (14) est déterminée en continu,
un signal de commande, lorsqu'une valeur pondérale inférieure à une valeur de consigne prédéterminée est détectée, étant émis par le deuxième dispositif de dosage (14) vers le dispositif de remplissage (16) et/ou le premier dispositif de dosage (12), ce qui entraîne l'exécution de l'étape c) et/ou de l'étape b), ou
**en ce que** les étapes b), c) et d) sont prédéterminées par une synchronisation de dosage (112, 114, 116).

10. Procédé selon l'une des revendications 5 à 9, **caractérisé en ce qu'**une ou plusieurs des étapes a) à d) sont réalisées sous refroidissement à une température ambiante de 1 à 18 °C, de préférence de 5 à 15 °C, de manière particulièrement préférée de 4 à 10 °C.

11. Procédé selon l'une des revendications 5 à 10, **caractérisé en ce qu'**une ou plusieurs des étapes a) à d) sont réalisées à une humidité d'air constante, en particulier à un point de rosée inférieur à 0 °C, de préférence inférieur à -10 °C, de manière particulièrement préférée à -20 °C.

12. Système de production (84) pour la fabrication de masses d'électrodes, comprenant un système de dosage de liant (10) selon l'une des revendications 1 à 4 et un mélangeur continu (86) qui est couplé au deuxième dispositif de dosage (14) dans le sens de convoyage (18).

13. Système de production (84) selon la revendication 12, **caractérisé en ce que** le mélangeur continu (86) est une extrudeuse qui comprend un boîtier (106) présentant une partie avant A, à laquelle se raccordent successivement, en aval dans le sens de convoyage (18), une partie médiane B et une partie arrière C,
au moins une entrée (96) pour un liant fibrillable et/ou d'autres composants d'électrode étant prévue dans la partie avant et/ou médiane, et une sortie (100) présentant une ouverture d'éjection (122) étant prévue dans la partie arrière,
au moins un arbre d'extrudeuse (108) qui s'étend dans le sens de convoyage (18) à travers le boîtier (106) étant logé dans le boîtier (106), ledit au moins un arbre d'extrudeuse (108) comportant une pluralité d'éléments de mélange et/ou d'éléments de convoyage (120) qui sont fabriqués au moins en partie entièrement en plastique ou qui comprennent une enveloppe en plastique qui entoure un noyau métallique, le plastique étant en particulier du PEEK, et/ou
l'ouverture d'éjection (122) étant réalisée de telle sorte que la masse d'électrodes peut être éjectée sans entrave de la sortie (100) sous forme de granulés, l'ouverture d'éjection (122) étant en particulier sensiblement délimitée par une paroi intérieure (140) d'un alésage de boîtier (119) dans lequel est agencé ledit au moins un arbre d'extrudeuse (108).

14. Système de production (84) selon la revendication 13, **caractérisé en ce qu'**un puits d'éjection (126) est agencé en aval de l'ouverture d'éjection (122).

15. Système de production (84) selon la revendication 13 ou 14, **caractérisé en ce qu'**un palier de butée (118) dans lequel est logé ledit au moins un arbre d'extrudeur (108) est prévu en aval de l'ouverture d'éjection (122).

16. Procédé de fabrication en continu de masses d'électrodes, le procédé comprenant les étapes a) à d) du procédé selon l'une des revendications 5 à 11 et, en outre, les étapes suivantes :
e) le mélange du liant fibrillable (20) avec d'autres composants (94) de la masse d'électrode dans un mélangeur continu (86), et
f) le traitement du liant fibrillable (20) avec les autres composants (94) de la masse d'électrode tout en fibrillant le liant fibrillable pour obtenir une masse d'électrode granulaire contenant un liant fibrillé (98).

17. Procédé de fabrication en continu de masses d'électrodes selon la revendication 16, **caractérisé en ce qu'**après l'étape f), un contrôle de qualité est effectué avec les étapes de procédé g) à i) suivantes :
g) la détection d'au moins un paramètre pertinent pour la qualité dans la masse d'électrodes contenant un liant fibrillé (98),
h) la comparaison du paramètre pertinent pour la qualité avec une plage de valeurs prédéfinie pour le paramètre pertinent pour la qualité, dans laquelle se situent les paramètres pertinents pour la qualité définis comme corrects,
i) si la comparaison révèle que le paramètre se situe en dehors de la plage de valeurs : émission d'un signal d'avertissement, création et envoi d'un rapport dans lequel le paramètre se situant en dehors de la plage de valeurs est mis en évidence, ajustement d'un paramètre pertinent pour la production de sorte que le paramètre pertinent pour la qualité se situe dans la plage de valeurs prédéfinie, et/ou
la modification d'un flux de produit de manière à éliminer la masse d'électrodes, et si la comparaison révèle que le paramètre se situe dans la plage de valeurs : validation de la masse d'électrodes contenant un liant fibrillé (98) pour d'autres étapes de traitement.
